# EUROPEAN PATENT APPLICATION

(11) **EP 4 269 849 A1**
(43) Date of publication of application: **01.11.2023**
(21) Application number: 21911122.6
(22) Date of filing: 27.12.2021
(51) Int. Cl.: F16K 27/00, H01G 11/14, H01G 11/84, H01G 9/00, H01G 9/12, H01M 50/184, H01M 50/198, H01M 50/342

(54) **HEAT SEALING FILM, VALVE DEVICE WITH HEAT SEALING FILM, ELECTRICITY STORAGE DEVICE, VALVE STRUCTURE FOR ELECTRICITY STORAGE DEVICE, AND METHOD FOR MANUFACTURING VALVE STRUCTURE FOR ELECTRICITY STORAGE DEVICE**

(30) Priority: 25.12.2020 JP 2020216763; 28.12.2020 JP 2020219076
(71) Applicant: DAI NIPPON PRINTING CO., LTD., Tokyo 162-8001 (JP)
(72) Inventor: SASAKI, Miho, Tokyo 162-8001 (JP)
(74) Representative: Müller-Boré & Partner Patentanwälte PartG mbB
(86) International application number: PCT/JP2021/048704
(87) International publication number: WO 2022/138985

(57) **Abstract**

A heat sealing film for bonding a receiving body and a valve device together, the heat sealing film comprising a heat-resistant resin layer having a melting peak temperature within a range of 150-350°C inclusive, wherein heat shrinkage rates in MD and TD when heated in a 200°C environment for 10 minutes are 7.0% or less.

## Description

### TECHNICAL FIELD

The present disclosure relates to a heat-sealable film, a valve device with a heat-sealable film, a power storage device, a valve structure for a power storage device, and a method for manufacturing a valve structure for a power storage device.

### BACKGROUND ART

There is a method in which a degassing valve, a weakly sealed portion, a hole, a cut or the like for releasing gas is provided in preparation for a case where a power storage device becomes abnormal in some way, so that gas is generated inside, leading to an excessive increase in internal pressure.

For example, Patent Document 1 discloses a lithium secondary battery in which an electrode unit including a positive electrode and a negative electrode, and a nonaqueous electrolyte are sealed in a battery case, in which the battery case has a flat shape having two wide surfaces opposed to each other, at least one of the wide surfaces of the battery case is provided with an internal pressure release mechanism that is actuated if an internal pressure of the case increases, the internal pressure release mechanism is designed to form, when actuated, a through-hole allowing communication between the inside and outside of the case and having an opening area equivalent to 3% or more of an area of the wide surface, and the internal pressure release mechanism is designed so that the opening of at least a part of the through-hole is located away from the electrode unit in a plane direction when the battery is seen through in a thickness direction of the battery case.

However, if an internal pressure release mechanism is provided in a housing itself that seals a battery element as in Patent Document 1, the strength of the housing including a film-shaped exterior material may be reduced, resulting in insufficiency of a sealing property and the like. In addition, a film-shaped exterior material has higher flexibility and is more easily deformed as compared to a metal can or the like. Therefore, if an internal pressure release mechanism is provided in an exterior material itself as in Patent Document 1, the pressure during release of the internal pressure may be likely to vary, leading to lacking in stable internal pressure release property.

Thus, in a conventional power storage device including a gas release mechanism in a film-shaped exterior material itself, it is difficult to appropriately release internally generated gas to the outside while maintaining a high sealing property.

Medium and large power storage devices such as in-vehicle and stationary power storage devices have a large electric capacity and a large battery element weight, and are therefore required to have a particularly high sealability and an appropriate gas release property.

For example, Patent Literature 2 discloses a bag closing valve (valve device). The bag closing valve is attached to an airtight bag. Specifically, the bag closing valve is attached to an airtight bag by performing heat sealing (thermal sealing) with the bag closing valve sandwiched in the airtight bag.

### PRIOR ART DOCUMENTS

### PATENT DOCUMENTS

Patent Document 1: Japanese Patent No. 4892842
Patent Document 2: Japanese Patent No. 6359731

### SUMMARY OF THE INVENTION

### PROBLEMS TO BE SOLVED BY THE INVENTION

For example, the bag closing valve (valve device) disclosed in Patent Literature 2 is made of synthetic resin. Depending on a combination of a material of a bag closing valve and a material of a bag inner layer and a shape thereof, it may be impossible to attach the bag closing valve to the airtight bag (housing) by heat sealing.

Since the power storage device is used for a long time, attachment of a valve device to the power storage device requires high bondability between a housing of the power storage device and the valve device.

For achieving high bondability between the housing of the power storage device and the valve device, the housing and the valve device may be bonded to each other with a heat-sealable film. However, studies extensively conducted by the inventor of the present disclosure have revealed that when the heat-sealable film is attached to the valve device by heat sealing, it is necessary to press-bond the heat-sealable film to the valve device under conditions of a high temperature and a long time (for example, at 190°C for 2 minutes) for exhibiting high bondability. Specifically, since the thickness of the valve device is relatively large, heat applied to the heat-sealable film is likely to escape to the valve device in attachment of the heat-sealable film to the valve device. Thus, it has been revealed that it is necessary to heat and pressurize the heat-sealable film for a long time for attaching the heat-sealable film to the valve device with a high bonding force.

Further, the inventor of the present disclosure has found an additional problem that if the heat-sealable film is heated for a long time, there is a possibility that the shape of the heat-sealable film is changed by thermal shrinkage, so that it is difficult to reliably attach the heat-sealable film at a predetermined location on the valve device.

Under these circumstances, a main object of the present disclosure is to provide a heat-sealable film for bonding a housing and a valve device to each other, which undergoes little change in shape, and can be suitably attached to the valve device even if the heat-sealable film is press-bonded to the valve device under conditions of a high temperature and a long time (for example, at 190°C for 2 minutes). Further, an object of the present disclosure is to provide a valve device with a heat-sealable film and a power storage device using the heat-sealable film.

### MEANS FOR SOLVING THE PROBLEM

The inventor of the present disclosure has extensively conducted studies for solving the above-described problems. As a result, the inventor has found that a heat-sealable film for bonding a housing and a valve device to each other, which includes a heat-resistant resin layer having a melting peak temperature in the range of 150°C or higher and 350°C or lower and has a heat shrinkage ratio of 7.0% or less in each of MD and TD when heated in an environment at 200°C for 10 minutes, undergoes little change in shape, and can be suitably attached to the valve device even if the heat-sealable film is press-bonded to the valve device under conditions of a high temperature and a long time (for example, at 190°C for 2 minutes). The present disclosure is an invention that has been completed by further conducting studies based on the above-mentioned findings.

That is, the present disclosure provides an invention of an aspect as described below.

A heat-sealable film for bonding a housing and a valve device to each other, the heat-sealable film including a heat-resistant resin layer having a melting peak temperature in the range of 150°C or higher and 350°C or lower, and the heat-sealable film having a heat shrinkage ratio of 7.0% or less in each of MD and TD when heated in an environment at 200°C for 10 minutes.

### ADVANTAGES OF THE INVENTION

According to the present disclosure, it is possible to provide a heat-sealable film for bonding a housing and a valve device to each other, which undergoes little change in shape, and can be suitably attached to the valve device even if the heat-sealable film is press-bonded to the valve device under conditions of a high temperature and a long time (for example, at 190°C for 2 minutes). Further, according to the present disclosure, it is possible to provide a valve device with a heat-sealable film and a power storage device using the heat-sealable film.

### BRIEF DESCRIPTION OF THE DRAWINGS

Fig. 1 is a perspective view showing a valve device, a housing to which the valve device is attached, and a heat-sealable film interposed between the valve device and the housing.
Fig. 2 is a plan view of a valve device according to Embodiment 1, to which a heat-sealable film is attached.
Fig. 3 is a sectional view taken along III-III in Fig. 2.
Fig. 4 is a flowchart showing a procedure for manufacturing a valve device to which a heat-sealable film is attached.
Fig. 5 is a flowchart showing a procedure for attaching a valve device, to which a heat-sealable film is attached, to a housing.
Fig. 6 shows a part of a housing in which a valve device is attached.
Fig. 7 is a sectional view taken along VII-VII in Fig. 6.
Fig. 8 is a plan view of a valve device according to Embodiment 2, to which a heat-sealable film is attached.
Fig. 9 is a sectional view taken along IX-IX in Fig. 8.
Fig. 10 is a sectional view taken along X-X in Fig. 8.
Fig. 11 is a schematic view of a cross-section in a thickness direction when a heat-sealable film of the present disclosure has a single layer.
Fig. 12 is a schematic view of a cross-section (laminated configuration) in a thickness direction when a heat-sealable film of the present disclosure has two layers.
Fig. 13 is a schematic view of a cross-section (laminated configuration) in a thickness direction when a heat-sealable film of the present disclosure has three layers.
Fig. 14 schematically shows a shape and a size of a valve structure used in an example.
Fig. 15 shows the valve structure of Fig. 14 observed from the y1 side.
Fig. 16 is a plan view of a power storage device including a valve device according to embodiment 3.
Fig. 17 is a sectional view taken along line D17-D17 in Fig. 16.
Fig. 18 is a front view of the valve device of Fig. 16.
Fig. 19 is a bottom view of the valve device of Fig. 18.
Fig. 20 is a plan view of the valve device of Fig. 18.
Fig. 21 is a perspective view of the valve device of Fig. 18 when the valve device is seen from the rear side.
Fig. 22 is a sectional view taken along line D22-D22 in Fig. 19.
Fig. 23 is a sectional view taken along line D23-D23 in Fig. 18.
Fig. 24 is a diagram related to a film sealing step in a method for manufacturing the valve device of Fig. 18.
Fig. 25 is a diagram related to a combining step in the method for manufacturing the valve device of Fig. 18.
Fig. 26 is a diagram related to a method for attaching the valve device of Fig. 18 to a case.
Fig. 27 is another diagram related to a method for attaching the valve device of Fig. 18 to a case.
Fig. 28 is still another diagram related to a method for attaching the valve device of Fig. 18 to a case.

### EMBODIMENTS OF THE INVENTION

A heat-sealable film of the present disclosure is a heat-sealable film for bonding a housing and a valve device to each other. A heat-sealable film includes a heat-resistant resin layer having a melting peak temperature in the range of 150°C or higher and 350°C or lower, and has a heat shrinkage ratio of 7.0% or less in each of MD and TD when heated in an environment at 200°C for 10 minutes. Since the heat-sealable film of the present disclosure has such a configuration, the heat-sealable film undergoes little change in shape and can be suitably attached to a valve device even if the heat-sealable film is press-bonded to the valve device under conditions of a high temperature and a long time (for example, at 190°C for 2 minutes).

Hereinafter, a heat-sealable film, a valve device with a heat-sealable film, and a power storage device of the present disclosure will be described in detail. In this specification, a numerical range indicated by the term "A to B" means "A or more" and "B or less". For example, the expression of "2 to 15 mm" means 2 mm or more and 15 mm or less.

### [Heat-sealable film]

The heat-sealable film of the present disclosure is a heat-sealable film for bonding a housing and a valve device to each other, which includes a heat-resistant resin layer having a melting peak temperature in the range of 150°C or higher and 350°C or lower, and has a heat shrinkage ratio of 7.0% or less in each of MD and TD when heated in an environment at 200°C for 10 minutes. Details of the housing, the valve device and the power storage device will be described after description of the heat-sealable film of the present disclosure.

The heat-sealable film includes a heat-resistant resin layer having a melting peak temperature in the range of 150°C or higher and 350°C or lower.

The melting peak temperature of the heat-resistant resin layer may be in the range of 150°C or higher and 350°C or lower, and is preferably about 160°C or higher, more preferably about 180°C or higher, still more preferably about 200°C or higher, and preferably about 345°C or lower, more preferably about 340°C or lower, still more preferably about 330°C or lower, from the viewpoint of more suitably exhibiting the effect of the present disclosure. The melting peak point is preferably in the range of about 150 to 345°C, about 150 to 340°C, about 150 to 330°C, about 160 to 350°C, about 160 to 345 °C, about 160 to 340°C, about 160 to 330°C, about 180 to 350°C, about 180 to 345°C, about 180 to 340°C, about 180 to 330°C, about 200 to 350°C, about 200 to 345°C, about 200 to 340°C, or about 200 to 330°C. In the present disclosure, the melting peak temperature is a value measured by the following method.

### (Measurement of melting peak temperature)

Measurement is performed using a differential scanning calorimeter (DSC). For the measurement, a commercially available differential scanning calorimeter (for example, "DSC-60 Plus" manufactured by Shimadzu Corporation) is used. In addition, for measurement conditions, the temperature rise rate is 10°C/min, the temperature measurement range is, for example, from -50 to 400°C, and an aluminum pan is used as a sample pan. The temperature measurement range is merely an example, and can be changed to an arbitrary range depending on a material forming the heat-resistant resin layer.

The heat-sealable film of the present disclosure may have a heat shrinkage ratio of 7.0% or less in each of MD and TD when heated in an environment at 200°C for 10 minutes, and from the viewpoint of more suitably exhibiting the effect of the present disclosure, the heat shrinkage ratio in each of MD and TD is preferably about 6.0% or less, more preferably about 5.0% or less, still more preferably about 4.0% or less. Thus, the heat-sealable film of the present disclosure is made of a material having a particularly low heat shrinkage ratio. Therefore, it is desirable that a material having a particularly low heat shrinkage ratio be used for the heat-resistant resin layer. The lower limit of the heat shrinkage ratio is 0.0%. The heat shrinkage ratio of the heat-resistant resin layer is a value measured by the following method.

### (Measurement of heat shrinkage ratio)

The heat shrinkage ratio of the heat-sealable film is measured by a method conforming to JIS K 7133: 1999. The heat-sealable film is cut to a size of 100 mm in length (MD) × 100 mm in width (TD) to obtain a test piece. Next, the test piece is left to stand in an oven set at a temperature of 200°C, and is heated for 10 minutes, and then taken out from the oven, and the heat shrinkage ratio (%) in each of the machine direction and transverse direction is measured. The heat shrinkage ratio is a result of measurement at a portion having the largest heat shrinkage ratio in each of MD and TD.

In the present disclosure, for MD and TD of the heat-sealable film, the heat shrinkage ratio is measured in any direction (0 °) of the heat-sealable film and in directions of 15 °, 30 °, 45 °, 60 °, 75 °, 90 °, 105 °, 120 °, 135 °, 150 ° and 165 ° from the direction (0 °), a direction with the highest heat shrinkage ratio is taken as MD, and the direction orthogonal to MD is taken as TD.

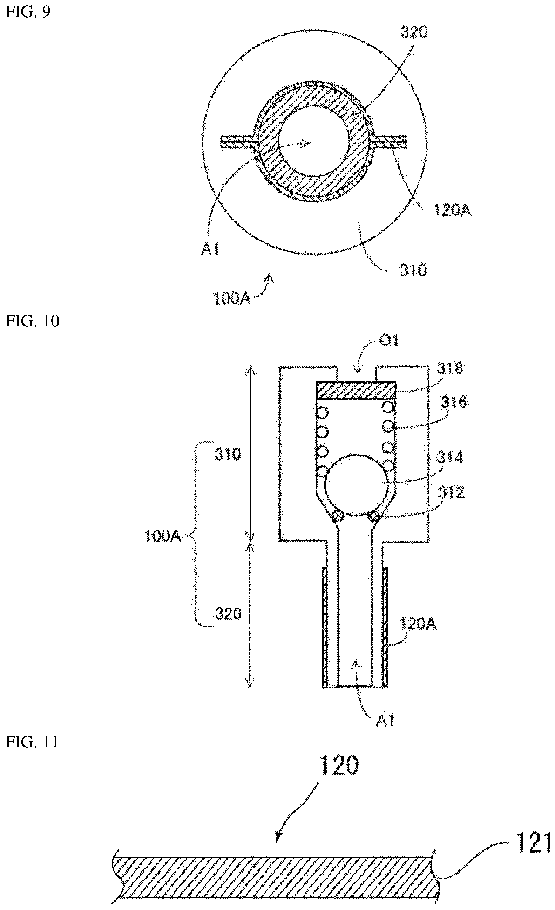

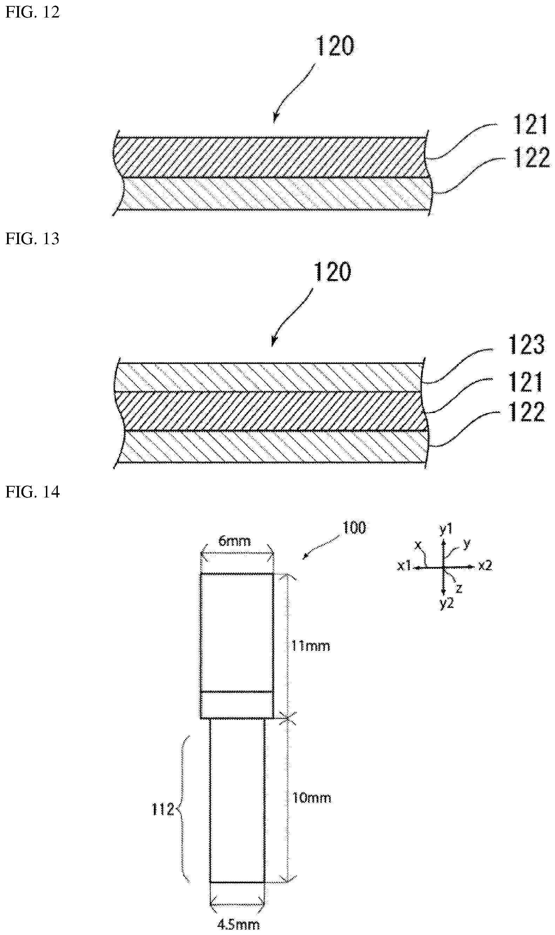

A heat-sealable film 120 of the present disclosure may include only a heat-resistant resin layer 121 as shown in the schematic view of Fig. 11, or may have a thermoplastic resin layer on at least one of the surfaces of the heat-resistant resin layer 121. Fig. 12 shows a laminated configuration in which a thermoplastic resin layer 122 is provided on one surface of the heat-resistant resin layer 121. Fig. 13 shows a laminated configuration in which thermoplastic resin layers 122 and 123 are provided, respectively, on both surfaces of the heat-resistant resin layer 121. The thermoplastic resin layers 122 and 123 are each provided as a layer forming a surface of the heat-sealable film 120.

In the heat-sealable film of the present disclosure, the heat-resistant resin layer may be a single layer, or may be a multiple layer. The heat-resistant resin layer is preferably a single layer. The thermoplastic resin layer may be a single layer or a multiple layer.

The heat-resistant resin layer can include, for example, at least one of a resin film and a nonwoven fabric, and it is preferable that the heat-resistant resin layer is formed of at least one of a resin film and a nonwoven fabric.

The material for forming the heat-resistant resin layer is not particularly limited as long as the melting peak temperature is in the range of 150 to 350°C and the heat sealing ratio of the heat-sealable film is 7.0% or less. Examples of the material for forming the heat-resistant resin layer include polyolefin-based resins, polyamide-based resins, polyester-based resins, epoxy resins, acrylic resins, fluororesins, silicone resins, phenol resins, silicon resins, polyurethane resins, polyether imide, polycarbonate, and mixtures and copolymers thereof. Among them, polyarylate, polyolefin-based resins, polyester-based resins and polyamide-based resins are particularly preferable.

Specific examples of the polyolefin-based resin include polyethylene such as low-density polyethylene, medium-density polyethylene, high-density polyethylene and linear low-density polyethylene; crystalline or noncrystalline polypropylene such as homopolypropylene, block copolymers of polypropylene (e.g. block copolymers of propylene and ethylene) and random copolymers of polypropylene (e.g. random copolymers of propylene and ethylene); terpolymers of ethylene-butene-propylene; and the like. Among these polyolefins, polyethylenes and polypropylene are preferred, with polypropylene being more preferred. In addition, it is preferable that the heat-resistant resin layer contains homopolypropylene, it is more preferable that the heat-resistant resin layer is formed of homopolypropylene and it is still more preferable that the heat-resistant resin layer is an unstretched homopolypropylene film because excellent electrolytic solution resistance is obtained.

Specific examples of the polyamide-based resin include aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 61, nylon 6T, nylon 6IT and nylon 6I6T (I denotes isophthalic acid and T denotes terephthalic acid), and polyamides containing aromatics, such as polymethaxylylene adipamide (MXD6); cycloaliphatic polyamides such as polyaminomethyl cyclohexyl adipamide (PACM6); polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

Specific examples of the polyester-based resin include polyethylene terephthalate, polybutylene terephthalate, polyethylene naphthalate, polybutylene naphthalate, polyethylene isophthalate, copolymerization polyesters with ethylene terephthalate as a main repeating unit, and copolymerization polyesters with a butylene terephthalate as a main repeating unit. Specific examples of the copolymerization polyester including ethylene terephthalate as a main repeating unit include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/isophthalate), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). Specific examples of the copolymerization polyester with butylene terephthalate as a main repeating unit include copolymer polyesters that are polymerized with butylene isophthalate and include butylene terephthalate as a main repeating unit (hereinafter, abbreviated as follows after polybutylene(terephthalate/isophthalate)), polybutylene(terephthalate/adipate), polybutylene(terephthalate/sebacate), polybutylene(terephthalate/decane dicarboxylate) and polybutylene naphthalate. These polyesters may be used alone, or may be used in combination of two or more thereof.

When the heat-resistant resin layer includes a resin film, the heat-resistant resin layer may include a film formed of the resin. In addition, when the heat-resistant resin layer includes a nonwoven fabric, the heat-resistant resin layer may include a nonwoven fabric formed of the resin. When the heat-resistant resin layer is a nonwoven fabric, it is preferable that the heat-resistant resin layer includes the above-described polyarylate, polyolefin-based resin, polyester-based resin, polyamide resin, or the like.

It is desirable that as such a resin for forming the heat-resistant resin layer, one having a particularly small heat shrinkage ratio be used. That is, for example, when the heat-resistant resin layer is formed of a polyester-based resin film, a polyester-based resin film having a particularly small heat shrinkage ratio is used. The same applies to a case where another resin is used. The resin film or nonwoven fabric having a small heat shrinkage ratio may be selected from commercially available products.

In addition, by blending a colorant into the heat-resistant resin layer, a layer containing a colorant can be obtained as the heat-resistant resin layer. In addition, the light transmittance can be adjusted by selecting a resin having low transparency. When the heat-resistant resin layer includes a film, it is also possible to use a colored film or a film having low transparency. In addition, when the heat-resistant resin layer includes a nonwoven fabric, it is possible to use a nonwoven fabric using fibers or a binder containing a colorant, or a nonwoven fabric having low transparency.

The thickness of the heat-resistant resin layer is not particularly limited as long as the effect of the present disclosure is exhibited, and the thickness of the heat-resistant resin layer is preferably about 5 µm or more, more preferably about 8 µm or more, still more preferably about 10 µm or more, and preferably about 200 µm or less, more preferably about 100 µm or less, still more preferably about 50 µm or less. The thickness of the heat-resistant resin layer is preferably in the range of about 5 to 200 µm, about 5 to 100 µm, about 5 to 50 µm, about 8 to 200 µm, about 8 to 100 µm, about 8 to 50 µm, about 10 to 200 µm, about 10 to 100 µm, about 10 to 50 µm, or the like.

When the heat-resistant resin layer includes a nonwoven fabric, the areal weight thereof is not particularly limited as long as the effect of the present disclosure is exhibited, and the areal weight is preferably about 1 g/m² or more, more preferably about 5 g/m² or more, still more preferably about 10 g/m² or more, and preferably about 300 g/m² or less, more preferably about 200 g/m² or less, still more preferably about 100 g/m² or less. The areal weight of the heat-resistant resin layer is preferably in the range of about 1 to 300 g/m², about 1 to 200 g/m², about 1 to 100 g/m², about 5 to 300 g/m², about 5 to 200 g/m², about 5 to 100 g/m², about 10 to 300 g/m², about 10 to 200 g/m², about 10 to 100 g/m² or the like.

In addition, when the heat-sealable film of the present disclosure includes a thermoplastic resin layer in addition to the heat-resistant resin layer, the thermoplastic resin layer is provided on at least one of the surfaces of the heat-resistant resin layer as described above.

The melting peak temperature of the thermoplastic resin layer is preferably about 120 to 160 °C, more preferably about 130 to 160 °C, still more preferably about 130 to 150 °C. The method for measuring the melting peak temperature is as described above.

The material for forming the thermoplastic resin layer is, for example, preferably a polyolefin-based resin. Among polyolefin-based resins, acid-modified polyolefins are preferable because they have excellent adhesion to the valve device.

The acid-modified polyolefin is not particularly limited as long as it is a polyolefin modified with an acid, and a polyolefin graft-modified with an unsaturated carboxylic acid or an anhydride thereof is preferable. Examples of the polyolefin that is modified with an acid include the above-mentioned polyolefins, and polypropylene is particularly preferable. In addition, examples of the carboxylic acid or anhydride thereof which is used for acid modification include maleic acid, acrylic acid, itaconic acid, crotonic acid, maleic anhydride and itaconic anhydride.

It is preferable that the acid-modified polyolefin includes at least one of acid-modified homopolypropylene and acid-modified block polypropylene in the thermoplastic resin layer.

The thermoplastic resin layer can include, for example, a resin film, and it is preferable that the thermoplastic resin layer is formed of a resin film.

When the thermoplastic resin layer includes a resin film, the thermoplastic resin layer may include a film formed of a polyolefin-based resin.

The thickness of the thermoplastic resin layer is not particularly limited as long as the effect of the present disclosure is exhibited, and the thickness of the thermoplastic resin layer is preferably about 5 µm or more, more preferably about 10 µm or more, still more preferably about 30 µm or more, and preferably about 200 µm or less, more preferably about 100 µm or less, still more preferably about 70 µm or less. The thickness of the thermoplastic resin layer is preferably in the range of about 5 to 200 µm, about 5 to 100 µm, about 5 to 70 µm, about 10 to 200 µm, about 10 to 100 µm, about 10 to 70 µm, about 30 to 200 µm, about 30 to 100 µm, about 30 to 70 µm, or the like.

The thickness of the entire heat-sealable film of the present disclosure is not particularly limited as long as the effect of the present disclosure is exhibited, and the thickness of the entire heat-sealable film is preferably about 10 µm or more, more preferably about 30 µm or more, still more preferably about 50 µm or more, and preferably about 300 µm or less, more preferably about 200 µm or less, still more preferably about 150 µm or less. The thickness of the entire heat-sealable film is preferably in the range of about 10 to 300 µm, about 10 to 200 µm, about 10 to 150 µm, about 30 to 300 µm, about 30 to 200 µm, about 30 to 150 µm, about 50 to 300 µm, about 50 to 200 µm, about 50 to 150 µm, or the like.

For manufacturing the heat-sealable film of the present disclosure, it is possible to use the above-described resin and apply a method such as an extrusion lamination method, a T-die method, an inflation method, or a thermal lamination method can be applied.

When the heat-resistant resin layer includes a resin film, known known adhesion facilitating means such as corona discharge treatment, ozone treatment or plasma treatment may be applied to a surface of the heat-resistant resin layer, or an adhesion promoter layer may be provided on the surface, if necessary.

The adhesion promoter layer is, for example, a layer provided if necessary for the purpose of firmly bonding the heat-resistant resin layer and the thermoplastic resin layer (not shown). The adhesion promoter layer may be provided between the heat-resistant resin layer and the thermoplastic resin layer and on only one of the layers, or may be provided between the layers and on both the layers.

The adhesion promoter layer can be formed using a known adhesion promoter such as an isocyanate-based adhesion promoter, a polyethyleneimine-based adhesion promoter, a polyester-based adhesion promoter, a polyurethane-based adhesion promoter or a polybutadiene-based adhesion promoter. From the viewpoint of further improving electrolytic solution resistance, it is preferable that the adhesion promotor layer is formed of an isocyanate-based adhesion promotor, among the above-mentioned adhesion promotors. As the isocyanate-based adhesion promotor, one composed of an isocyanate component selected from a triisocyanate monomer and polymeric MDI is excellent in lamination strength and undergoes little decrease in lamination strength after immersion in an electrolytic solution. In particular, it is particularly preferable to form the adhesion promotor layer from an adhesion promotor composed of triphenylmethane-4,4',4"-triisocyanate which is a triisocyanate monomer or polymethylene polyphenyl polyisocyanate which is polymeric MDI (NCO content: about 30% and viscosity: 200 to 700 mPa•s). In addition, it is also preferable to form the adhesion promoter layer from tris(p-isocyanatephenyl)thiophosphate which is a triisocyanate monomer, or a two-liquid curable adhesion promoter contain a polyethyleneimine-based resin as a main component and polycarbodiimide as a crosslinking agent.

The adhesion promoter layer can be formed by performing coating by a known coating method such as a bar coating method, a roll coating method or a gravure coating method, and drying. The coating amount of the adhesion promoter is about 20 to 100 mg/m², preferably about 40 to 60 mg/m² in the case of an adhesion promoter composed of triisocyanate, about 40 to 150 mg/m², preferably about 60 to 100 mg/m² in the case of an adhesion promoter composed of polymeric MDI, and about 5 to 50 mg/m², preferably about 10 to 30 mg/m² in the case of a two-liquid curable adhesion promoter containing polyethyleneimine as a main component and polycarbodiimide as a crosslinking agent. The triisocyanate monomer is a monomer having three isocyanate groups per molecule, and the polymeric MDI is a mixture of MDI and a MDI oligomer obtained by polymerizing MDI, and is represented by the following formula.

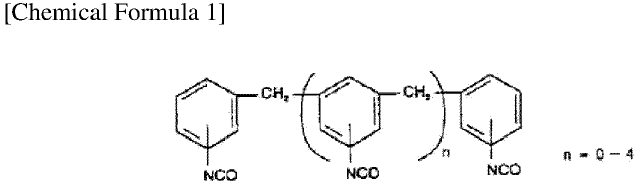

An adhesive layer may be provided on at least one of the surfaces of the heat-sealable film from the viewpoint of enhancing long-term adhesion between the heat-sealable film and the surface treatment layer formed on a surface of the valve device by a treatment liquid. Examples of the resin composition for forming such an adhesive layer include mixed resins of acid-modified polypropylene and a curing agent (for example, an isocyanate compound, an epoxy resin or the like). In addition, on the surface treatment layer formed on a surface of the valve device, such an adhesive layer can be provided in advance to enhance long-term adhesion between the heat-sealable film and the surface treatment layer formed on the surface of the valve device.

Next, an example of a specific embodiment will be described in which the heat-sealable film of the present disclosure is used for a valve device, a housing, and a power storage device.

### [1. Embodiment 1]

### < 1-1. Overview>

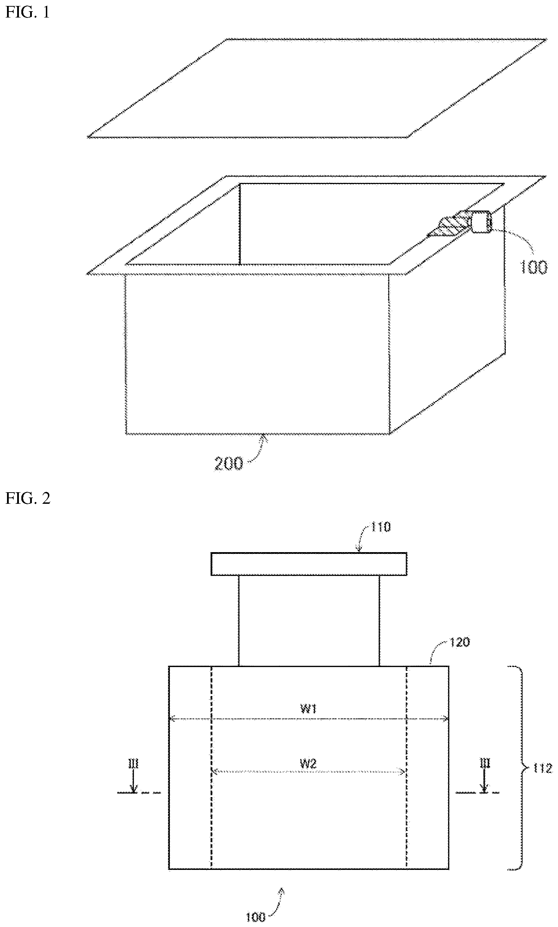

Fig. 1 is a perspective view showing a valve device 100 according to the present embodiment, and a housing 200 to which the valve device 100 is attached. As shown in Fig. 1, the valve device 100 is attached to the housing 200, for example.

The housing 200 is formed by, for example, molding a laminate (laminate film) including a base material layer, a barrier layer and a heat-sealable resin layer in this order. The housing 200 is configured to house, for example, coffee, fermented food (fermented soybean paste or the like), medicine and a secondary battery (lithium ion battery or the like). The contents in the housing 200 generate, for example, gas over time. As the barrier layer, a metal foil layer, more specifically an aluminum foil layer, is generally employed from the viewpoint of an excellent barrier function and cost. For example, when a battery element (includes a capacitor, a capacitor or the like) of a lithium ion battery or the like is housed in the housing 200, a laminated battery is formed. Note that the laminated battery in which a secondary battery such as a lithium ion battery is housed is an example of a power storage device, and either a primary battery or a secondary battery may be housed in the housing 200. Preferably, a secondary battery is housed in the housing 200. The type of a secondary battery housed in the housing 200 is not particularly limited, and examples thereof include lithium ion batteries, lithium ion polymer batteries, all-solid-state batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors.

The valve device 100 is configured to communicate with the inside of the housing 200. For example, the valve device 100 is configured to ensure that if the pressure of the inside of the housing 200 is caused to reach a predetermined pressure by gas generated in the housing 200, the pressure is decreased. The valve device 100 includes a mechanism that provides a so-called return valve, breaking valve, selective transmission valve or the like. The valve device 100 is heat-sealed (thermally sealed) while being held in the housing 200, thereby being attached to the housing 200. That is, the adhesive strength between the valve device 100 and the housing 200 is a strength at which bonding between the valve device 100 and the housing 200 is not loosened even if the pressure of the inside of the housing 200 reaches a pressure at which a valve mechanism (return valve, breaking valve, selective transmission valve or the like) in the valve device 100 is opened.

In general, it may be difficult to attach the valve device to the housing by heat sealing depending on a material of the housing of the valve device. For example, if the housing of the valve device is made of metal, it is difficult to attach the valve device to the housing by heat sealing. However, in the valve device 100 according to the present embodiment, the valve device 100 and the housing 200 can be bonded by heat sealing regardless of the material of the housing. Hereinafter, a configuration of the valve device 100, a method for manufacturing the valve device 100, and a method for attaching the valve device 100 to the housing 200 will be described in this order.

### <1-2. Configuration of valve device>

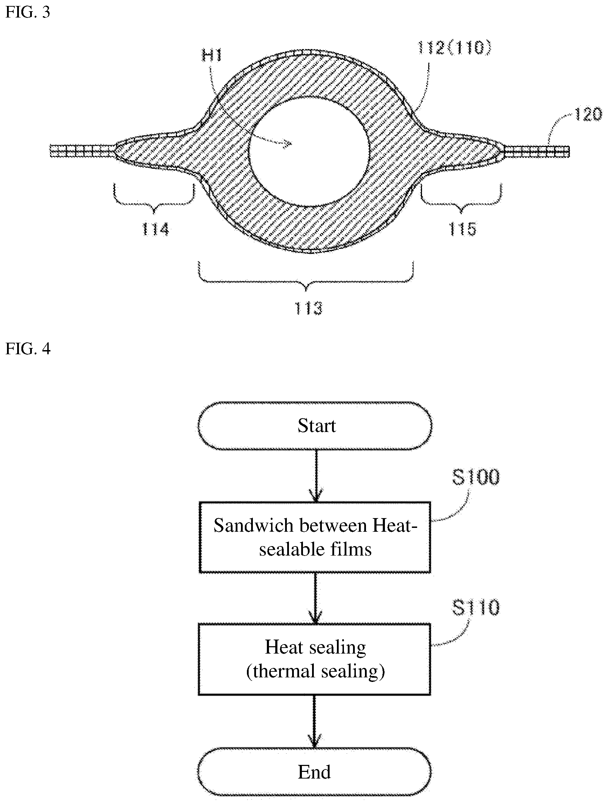

Fig. 2 is a plan view of the valve device 100. Fig. 3 is a sectional view taken along III-III in Fig. 2. Referring to Figs. 2 and 3, the valve device 100 includes a valve device main body 110 and the heat-sealable film 120. That is, in the valve device 100, the heat-sealable film 120 corresponding to an adhesive member is attached to the valve device main body 110 in advance.

The valve device main body 110 is made of metal. The valve device main body 110 is made of aluminum, brass, stainless steel or the like. The valve device main body 110 includes a mechanism that provides a so-called return valve, breaking valve, selective transmission valve or the like. A vent hole H1 is formed inside the valve device main body 110. That is, in the valve device main body 110, a hole through which gas passes is formed at an end surface located in the housing 200. That is, the valve device main body 110 is configured to ensure, when the valve device 100 is attached to the housing 200 (Fig. 1), that if the pressure of the inside of the housing 200 is caused to reach a predetermined pressure by gas generated in the housing 200, the gas is discharged through the vent hole H1 to the outside of the housing 200 to decrease the pressure. At the time of attachment to the housing 200, the lower end side of the valve device 100 is directed to the inside of the housing 200.

The heat-sealable film 120 is configured to be bonded to both the valve device main body 110 and the housing 200 (Fig. 1) by heat sealing. That is, the adhesive strength between the heat-sealable film 120 and the housing 200 when the valve device 100 is attached to the housing 200 is a strength at which bonding between the heat-sealable film 120 and the housing 200 is not loosened even if the pressure of the inside of the housing 200 reaches a pressure at which a valve mechanism (return valve, breaking valve, selective transmission valve or the like) in the valve device 100 is opened. Details of the heat-sealable film 120 of the present disclosure are as described above.

The heat-sealable film 120 is bonded to the valve device main body 110 while covering the outer periphery of a bonding portion 112 of the valve device main body 110. Since the heat-sealable film 120 is also bonded to the housing 200 (Fig. 1) as described above, the valve device 100 and the housing 200 can be easily bonded to each other by heat sealing although the valve device main body 110 is made of metal in the valve device 100. The cross-sectional shape of the bonding portion 112 has a teardrop shape (a shape including a circular portion 113 and wing-shaped extension end parts 114 and 115). That is, the cross-sectional shape of the bonding portion 112 is a shape in which the entire periphery is curved. More specifically, since the outer peripheral cross-section of the circular portion 113 is convexly curved, and both ends of the circular portion 113 and the roots of the wing-shaped extension end parts 114 and 115 are connected, respectively, while forming a gently concavely curved outer peripheral cross-section, the heat-sealable film 120 can be bonded to the outer periphery of the bonding portion 112 of the valve device main body 110 without any gaps.

Further, a length of the heat-sealable film 120 in the width direction W1 is larger than a length of the bonding portion 112 in the width direction W2. That is, in the valve device 100, the heat-sealable film 120 extends over at least one round of the outer circumference of the bonding portion 112 (Fig. 3). Thus, in the valve device 100, the heat-sealable film 120 is disposed over a wide region, so that it is possible to more reliably bond the valve device 100 and the housing 200 to each other.

In addition, the region over which the heat-sealable film 120 is disposed extends to the lower end of the bonding portion 112 (valve device main body 110). The reason for this will be described below. As described above, a secondary battery may be housed in the housing 200 to which the valve device 100 is attached. Here, if the bonding portion 112 (metal) is exposed over a wide region, the electrode of the secondary battery and the bonding portion 112 are more likely to come into contact with each other increases, so that a short circuit easily occurs. In the valve device 100 according to the present embodiment, the region over which the heat-sealable film 120 is disposed extends to the lower end of the bonding portion 112. Therefore, in the valve device 100, the possibility of causing a short circuit by the valve device 100 can be reduced even if a secondary battery is housed in the housing 200. The heat-sealable film 120 may be disposed so as to protrude downward below the lower end of the bonding portion 112.

From the viewpoint of, for example, enhancing the bondability of the heat-sealable film, it is preferable that at least a part of the surface of the valve device is treated with a treatment liquid containing a phenol-based resin or an acryl-based resin, chromium nitrate and phosphoric acid. In the treatment liquid, the phosphoric acid may be contained in the treatment liquid in the form of a salt (that is, phosphate) or polyphosphoric acid (condensed phosphoric acid).

The acryl-based resin is preferably polyacrylic acid, an acrylic acid-methacrylic acid ester copolymer, an acrylic acid-maleic acid copolymer, an acrylic acid-styrene copolymer, or a derivative thereof such as a sodium salt, an ammonium salt or an amine salt thereof. In particular, a derivative of polyacrylic acid such as an ammonium salt, a sodium salt or an amine salt of polyacrylic acid is preferable. In the present disclosure, the polyacrylic acid means a polymer of acrylic acid. The acryl-based resin is also preferably a copolymer of acrylic acid and dicarboxylic acid or dicarboxylic anhydride, and is also preferably an ammonium salt, a sodium salt or an amine salt of a copolymer of acrylic acid and dicarboxylic acid or dicarboxylic anhydride. The acryl-based resins may be used alone, or may be used in combination of two or more thereof.

The weight average molecular weight of the acryl-based resin is preferably about 1,000 to 1,000,000, more preferably about 3,000 to 800,000, still more preferably about 10,000 to 800,000. As the molecular weight increases, the durability is enhanced, but the water-solubility of the acryl-based resin decreases, so that the treatment liquid becomes instable, leading to deterioration of manufacturing stability. Conversely, the durability is deteriorated as the molecular weight increases. In the present disclosure, high durability is obtained when the weight average molecular weight of the acryl-based resin is 1,000 or more, and good manufacturing stability the durability is obtained when the weight average molecular weight is 1,000,000 or less. In the present disclosure, the weight average molecular weight of the acryl-based resin is a value obtained by performing measurement by gel permeation chromatography (GPC) under the condition of using polystyrene as a standard sample.

The acid value of the acryl-based resin is preferably large because a larger number of COOH groups may have a higher effect of contributing to bondability.

In the treatment liquid, the phosphoric acid may be present in the form of a salt (phosphate). Examples of the phosphate include sodium phosphate, potassium phosphate, and ammonium phosphate. In the treatment liquid in the present disclosure, the phosphoric acid may be present as a polymer such as polyphosphoric acid (condensed phosphoric acid).

Examples of the particularly preferred composition of the treatment liquid include compositions containing polyacrylic acid, chromium (III) nitrate and phosphoric acid, compositions containing an acrylic acid-methacrylic acid ester copolymer, chromium (III) nitrate and phosphoric acid, compositions containing a sodium salt of an acrylic acid-maleic acid copolymer, chromium (III) nitrate and phosphoric acid, compositions containing an acrylic acid-styrene copolymer, chromium (III) nitrate and phosphoric acid, and compositions containing various salts of (sodium salt, ammonium salt, amine salt and the like) of acrylic acid, chromium (III) nitrate and phosphoric acid.

The ratio between chromium nitrate to phosphoric acid (which may be in the form or a salt) in the treatment liquid is not particularly limited, and the ratio of phosphoric acid based on 100 parts by mass of chromium nitrate is preferably about 30 to 120 parts by mass, more preferably about 40 to 110 parts by mass. The ratio of the acryl-based resin in the treatment liquid is preferably about 30 to 300 parts by mass, more preferably about 40 to 250 parts by mass, still more preferably about 50 to 200 parts by mass based on 100 parts by mass of chromium nitrate.

The solid content concentration of the treatment liquid is not particularly limited as long as a surface treatment layer is formed by application of the treatment liquid to the valve device and baking, and the solid content concentration of the treatment liquid is, for example, about 1 to 10 mass%.

The thickness of the surface treatment layer is not particularly limited, and is preferably about 1 nm to 10 µm, more preferably about 1 to 100 nm, still more preferably about 1 to 50 nm, from the viewpoint of suitably exhibiting the effect of the present disclosure. The thickness of the surface treatment layer can be measured by observation with a transmission electron microscope or a combination of observation with a transmission electron microscope and energy dispersive X-ray spectroscopy or electron beam energy loss spectroscopy.

From the same viewpoint, the amount of Cr in the surface treatment layer per 1 m² of the surface of the valve device is preferably about 0.5 to 30 mass%, more preferably about 1 to 20 mass%, still more preferably about 3 to 10 mass%.

The treatment liquid may contain other components in addition to an acryl-based resin, chromium nitrate and phosphoric acid. Examples of the other components include solvents. As the solvent, various solvents such as water, an alcohol-based solvent, a hydrocarbon-based solvent, a ketone-based solvent, an ester-based solvent, and an ether-based solvent can be used, and water is preferable. The solvents may be used alone, or may be used in combination of two or more thereof.

Examples of the other components chromium compounds other than chromium sulfate (for example, chromium fluoride, chromium sulfate, chromium acetate, chromium oxalate, chromium biphosphate, acetylacetate chromate, chromium chloride and chromium potassium sulfate). The other components may be used alone, or may be used in combination of two or more thereof.

The method for forming a surface treatment layer using a treatment liquid can be carried out by applying the treatment liquid to at least a part of the surface of the valve device by a bar coating method, a roll coating method, a gravure coating method, an immersion method or the like, and then performing heating (drying) so that the surface temperature of the valve device is about 70 to 200°C.

After the treatment liquid is applied to the surface of the valve device, the treatment liquid is dried without having been washed with water. The drying method is not particularly limited, and examples thereof include drying methods using a batch-type drying furnace, a continuous hot air circulation-type drying furnace, a conveyor-type hot air drying furnace, an electromagnetic induction heating furnace using an IH heater, or the like. The air volume, the wind speed and the like set in the drying method are arbitrarily selected.

Before the treatment liquid is applied to the surface of the valve device, a surface of the barrier layer may be subjected to a degreasing treatment by an alkali immersion method, an electrolytic cleaning method, an acid cleaning method, an electrolytic acid cleaning method or the like before the barrier layer is subjected to a chemical conversion treatment. When a degreasing treatment is performed as described above, the chemical conversion treatment of the surface of the valve device can be further efficiently performed. When an acid degreasing agent with a fluorine-containing compound dissolved in an inorganic acid is used for degreasing treatment, not only an effect of degreasing the surface of the valve device can be obtained but also a metal fluoride can be formed as a passive state, and in this case, only degreasing treatment may be performed.

The treatment liquid may be used on at least a part of the surface of the valve device, and it is preferable to use the treatment liquid, for example, at a position where the heat-sealable film is attached or a position where an adhesive is applied. In addition, since the treatment liquid can be easily applied to the surface of the valve device, it is more preferable to use the treatment liquid on the entire surface of the valve device. When the treatment liquid is used on the entire surface of the valve device, a surface treatment layer can be formed on the entire surface of the valve device by, for example, immersing the valve device in the treatment liquid and drying the valve device.

In addition, a valve structure with a heat-sealable film is obtained by heat-sealing the heat-sealable film of the present disclosure to the outer periphery of the valve device. The outer periphery of the valve device to which the heat-sealable film is attached is made of metal including, for example, a surface treatment layer formed by surface treatment with the treatment liquid.

### <1-3. Method of manufacturing valve device>

Fig. 4 is a flowchart showing a procedure for manufacturing the valve device 100. The treatment shown in the flowchart is performed by, for example, a manufacturing apparatus after the valve device main body 110 and the heat-sealable film 120 are provided.

Referring to Fig. 4, the manufacturing apparatus sandwiches the bonding portion 112 of the valve device main body 110 between the heat-sealable films 120 (step S100). The manufacturing apparatus heat-seals the heat-sealable film 120 to the bonding portion 112 with the bonding portion 112 sandwiched between the heat-sealable films 120 (step S110). In this way, the valve device 100 is completed.

### <1-4. Method for attachment to housing>

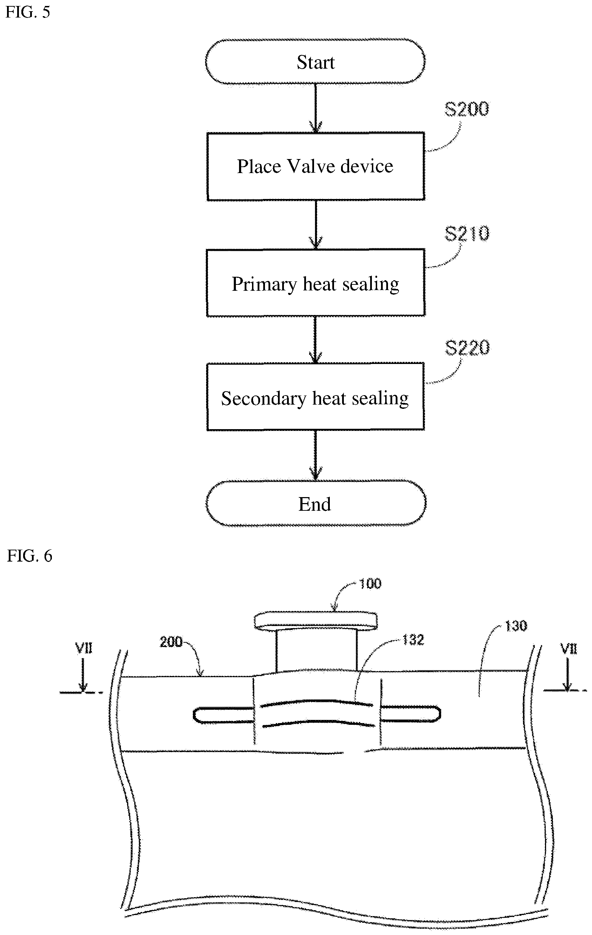

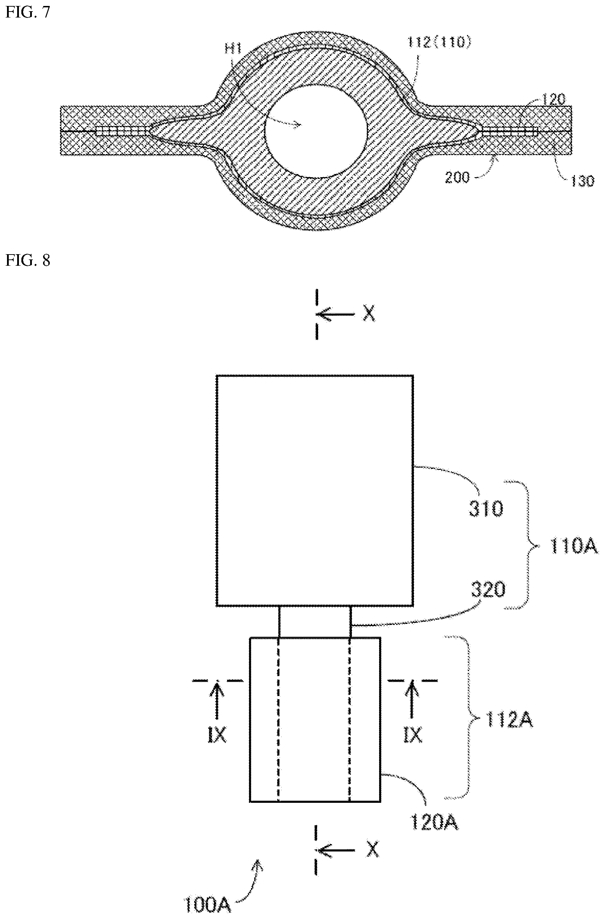

Fig. 5 is a flowchart showing a procedure for attaching the valve device 100 to the housing 200. The treatment shown in the flowchart is performed by, for example, a manufacturing apparatus after the valve device 100 and the housing 200 are provided. Fig. 6 shows a part of the housing 200 in which the valve device 100 is attached. Fig. 7 is a sectional view taken along III-III in Fig. 6.

Referring to Figs. 5, 6 and 7, the manufacturing apparatus places the valve device 100 on the housing 200 (step S200). For example, the manufacturing apparatus places the valve device 100 on the housing 200 so as to sandwich the valve device 100 between flange portions (peripheral edge portions) of the housing 200 (Fig. 1).

The manufacturing apparatus performs first heat sealing (primary heat sealing) with the valve device 100 sandwiched between flange portions of the housing 200 (step S210). In this way, the entire flange portion of the housing 200 (primary seal portion 130 (Figs. 6 and 7)) is heat-sealed. Thereafter, the manufacturing apparatus performs second heat sealing (primary heat sealing) for further consolidate the seal at the periphery of the valve device 100 (step S220). In this way, the periphery of the valve device 100 (secondary seal portion 132) is more solidly heat-sealed. In this way, the valve device 100 is attached to the housing 200.

### <1-5. Characteristics>

As described above, in the valve device 100 according to the present embodiment, the heat-sealable film 120 that can be bonded to the housing is bonded to the outer periphery of the valve device main body 110 in advance. Therefore, in the valve device 100, it is possible to easily bond the housing 200 and the valve device 100 to each other regardless of the material of the valve device main body 110.

In the valve device 100 according to the present embodiment, the valve device main body 110 is made of metal. When the valve device main body 110 is made of metal, and the valve device main body 110 and the housing 200 are directly bonded to each other, the material of the heat-sealable resin layer that forms the inner layer of the housing 200 is limited, and therefore, designing or selecting a material so as to secure both the sealing property of the housing 200 (welding between the heat-sealable resin layers) and the direct bondability between the housing 200 and the valve device main body 110 is relatively difficult. In the valve device 100 according to the present embodiment, the heat-sealable film 120 is bonded to the outer periphery of the valve device main body 110 in advance, and therefore, even if the valve device main body 110 is made of metal, it is possible to easily bond the housing 200 and the valve device 100 to each other by appropriately selecting, as a material for the heat-sealable film 120, a material having bondability to a heat-sealable resin layer which is an inner layer of the housing 200 and bondability to a metal forming the valve device main body 110. Therefore, the range of design or selection of a material for the heat-sealable resin layer is not more limited as compared the case of direct bonding described above.

As a method for disposing the heat-sealable film 120 between the valve device main body 110 and the housing 200, for example, a method may be conceived in which the housing 200, the heat-sealable film 120 and the valve device main body 110 are simultaneously heat-sealed. However, if the valve device main body 110 is made of metal, the valve device main body 110 has high heat dissipation, and therefore, simultaneously thermal sealing may lead to a situation in which while the housing 200 and the heat-sealable film 120 are bonded to each other, the valve device main body 110 and the heat-sealable film 120 are not bonded to each other. In the valve device 100 according to the present embodiment, the heat-sealable film 120 is bonded to the valve device main body 110 in advance. Therefore, the valve device 100 enables avoidance of the above-described situation.

In the valve device 100 according to the present embodiment, a film-shaped adhesive member, specifically, the heat-sealable film 120 is employed. When the adhesive member is in the form of a film as described above, the continuous heat-sealable film 120 is wound in the form of a roll to manufacture a roll of the heat-sealable film 120, the heat-sealable film 120 is unwound and cut by a predetermined length from the roll thereof, and the heat-sealable film 120 is run or wound along the outer periphery of the separately provided valve device main body 110 to perform bonding. That is, the operation of attachment of the adhesive member to the valve device main body 110 can be efficiently carried out.

In the valve device 100 according to the present embodiment, the outer periphery of the bonding portion 112 is curved. In the case where the outer periphery of the bonding portion 112 is curved, it is more difficult to bond the heat-sealable film 120 to the outer periphery of the bonding portion 112 as compared to a case where the outer periphery of the bonding portion 112 has a flat surface. In the valve device 100 according to the present embodiment, the heat-sealable film 120 is bonded to the outer periphery of the bonding portion 112 in advance. Therefore, in the valve device 100, unlike, for example, a case where the housing 200, the heat-sealable film 120 and the valve device main body 110 are simultaneously heat-sealed, a situation does not occur in which the heat-sealable film 120 is not bonded to the valve device main body 110 during heat-sealing.

In the valve device 100 according to the present embodiment, the heat-sealable film 120 includes a core material. The valve device 100 can be attached to the housing 200 that requires maintenance of internal insulation quality (for example, a housing of a pouch-type lithium ion battery). In the present embodiment, heat sealing is performed twice in the vicinity of the valve device 100 for further consolidating the seal in the vicinity of the valve device 100. If the heat-sealable film 120 does not include a core material, and heat-sealing is repeatedly performed, the heat-sealable resin layer and the adhesive member forming the inner layer of the housing 200 are melted by heat and pressure and forced out to a portion having a low pressure. There is a possibility that resultantly, a metal foil layer such as an aluminum foil, which forms a barrier layer of the housing 200, and the valve device main body 110 made of metal are short-circuited, so that an insulating layer (heat-sealable resin layer and adhesive member forming the inner layer of the housing) at a position where the valve device 100 is sandwiched in the housing 200, leading to occurrence of a short-circuit in the housing 200. In the valve device 100 according to the present embodiment, the heat-sealable film 120 includes a core material. Therefore, in the valve device 100, the heat-sealable film 120 including a core material suppresses breakage of the insulating layer, so that insulation quality of the inside of the housing 200 can be maintained even if heat sealing is performed twice (two or more times) in the vicinity of the valve device 100.

### [2. Embodiment 2]

Fig. 8 is a plan view of a valve device 100A according to Embodiment 2. As shown in Fig. 8, the valve device 100A includes a valve device main body 110A and a heat-sealable film 120A. That is, in the valve device 100A, the heat-sealable film 120A is bonded to the valve device main body 110A in advance.

The valve device main body 110A is made of, for example, metal, and includes a valve function portion 310 and a seal attachment portion 320. A bonding portion 112A is formed in at least a part of the seal attachment portion 320. That is, the heat-sealable film 120A is bonded to the periphery of the bonding portion 112A. The bonding portion 112A is a portion which is sandwiched in the housing 200 (Fig. 1) to be fixed, and when heat sealing is performed, the outer peripheral surface of the bonding portion 112A and the heat-sealable resin layer which is the innermost layer of the housing 200 are sealed and joined to each other with the heat-sealable film 120A interposed therebetween.

The adhesive strength between the heat-sealable film 120A and the housing 200 when the valve device 100A is attached to the housing 200 is a strength at which bonding between the heat-sealable film 120A and the housing 200 is not loosened even if the pressure of the inside of the housing 200 reaches a pressure at which a valve mechanism (return valve, breaking valve, selective transmission valve or the like) in the valve device 100A is opened.

The material and the like of the heat-sealable film 120A are, for example, the same as those of the heat-sealable film 120 in Embodiment 1 described above. Like the heat-sealable film 120 in Embodiment 1 described above, the heat-sealable film 120A is configured to be bonded to both the valve device main body 110A and the housing 200 by heat sealing.

Fig. 9 is a sectional view taken along IX-IX in Fig. 8. In the valve device 100A, a cross-section of each of the valve function portion 310 and the seal attachment portion 320 has a perfectly circular shape, and a ventilation passage A1 is formed inside the seal attachment portion 320, as shown in Fig. 9. A cross-section of the ventilation passage A1 has a perfectly circular shape. The heat-sealable film 120A does not cover the ventilation passage A1. The cross-sectional shape of the seal attachment portion 320 is not necessarily a perfectly circular shape, and may be, for example, a teardrop shape as shown in Fig. 3.

The diameter of the cross-section of the valve function portion 310 is longer than the diameter of the cross-section of the seal attachment portion 320. As a result, a level difference is formed at a boundary between the valve function portion 310 and the seal attachment portion 320 (Fig. 8). The seal attachment portion 320 has a shorter diameter, resulting in enhancement of airtightness when the valve device 100A is attached to the housing 200.

Fig. 10 is a sectional view taken along line X-X in Fig. 8. As shown in Fig. 10, a ventilation passage A1 is formed inside the seal attachment portion 320. For example, the ventilation passage A1 guides gas generated in the housing 200 to the valve function portion 310.

A valve mechanism configured to discharge gas generated in the housing 200 (Fig. 1) is provided inside the valve function portion 310. Specifically, the valve function portion 310 includes an O-ring 312, a ball 314, a spring 316, and a membrane 318. That is, the valve function portion 310 is provided with a ball spring type valve mechanism. The valve mechanism provided in the valve function portion 310 is not particularly limited as long as it can reduce the pressure of the inside of the housing 200, which is caused to increase by gas, and the valve mechanism may be, for example, a valve mechanism of poppet type, duckbill type, umbrella type, diaphragm type or the like. The ball 314 does not necessarily have a spherical shape, and may have, for example, a hemispherical shape, a spheroidal shape, or an oblate-spheroidal shape. For example, when the ball 314 has a hemispherical shape, a columnar member may extend from the flat surface.

The O-ring 312 is a hollow circular ring, and is made of, for example, fluorine rubber. Each of the ball 314 and the spring 316 is made of, for example, stainless steel. The ball 314 may be made of resin. For example, when a battery element (for example, a lithium ion battery) is housed in the housing 200, the membrane 318 includes a PTFE membrane which has a pore diameter of, for example, about 10⁻² to 10⁰ µm, and is impermeable to an electrolytic solution and permeable (selectively permeable) to only gas. The term "PTFE" means polytetrafluoroethylene. In addition, the PTFE membrane is a soft material, and if the strength is insufficient, it is possible to use a membrane reinforced by integrally molding PTFE and a mesh or a nonwoven fabric of polypropylene, polyester or the like. In Embodiment 2, either a primary battery or a secondary battery may be housed in the housing 200 as in Embodiment 1 described above. Preferably, a secondary battery is housed in the housing 200. The type of a secondary battery housed in the housing 200 is not particularly limited, and examples thereof include lithium ion batteries, lithium ion polymer batteries, all-solid-state batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors.

When the pressure of the inside of the housing 200 reaches a predetermined pressure with the valve device 100A attached to the housing 200 and the battery element housed in the housing 200, the gas guided from the ventilation passage A1 presses the ball 314 to the exhaust port O1 side. When the ball 314 is pressed to shrink the spring 316, the gas in the housing 200 passes through a gap formed between the ball 314 and the O-ring 312, and permeates the membrane 318 to be discharged through the exhaust port O1 to the outside of the housing 200.

As described above, in the valve device 100A according to Embodiment 2, the heat-sealable film 120A that can be bonded to the housing 200 is bonded to the outer periphery of the valve device main body 110A in advance. Therefore, in the valve device 100A, it is possible to easily bond the housing 200 and the valve device 100A to each other regardless of the material of the valve device main body 110A. The method for manufacturing the valve device 100A according to Embodiment 2 and the method for attaching the valve device 100A to the housing 200 are the same as those for the valve device 100 according to Embodiment 1.

### [3. Modifications of Embodiments 1 and 2]

While Embodiments 1 and 2 have been described above, the present invention is not limited to Embodiments 1 and 2, and various modifications can be made without departing from the gist of the present invention. Hereinafter, modifications will be described.

### <3-1>

In Embodiment 1 described above, the cross-section of the bonding portion 112 has a teardrop shape. However, the cross-sectional shape of the bonding portion 112 is not limited thereto. The cross-sectional shape of the bonding portion 112 may be, for example, a circular shape, a polygonal shape, or a shape having a part that is curved and a part that is not curved. That is, the cross-sectional shape (outer periphery) of the bonding portion 112 may be not curved, or only partially curved.

### <3-2>

In Embodiments 1 and 2, the valve device main body 110, 110A is made of metal. However, the valve device main body 110, 110A is not necessarily made of metal. For example, the valve device main body 110, 110A may be made of a material other than metal, which is not directly bonded to the housing 200 by heat sealing.

### <3-3>

In Embodiments 1 and 2 described above, the heat-sealable film 120, 120A includes a core material. However, the heat-sealable film 120, 120A is not necessarily include a core material.

### <3-4>

In Embodiments 1 and 2 described above, the heat-sealable film 120, 120A is bonded to the entire outer periphery of the bonding portion 112, 112A. However, the heat-sealable film 120, 120A is not necessarily bonded to the entire outer periphery of the bonding portion 112, 112A. For example, the heat-sealable film 120, 120A may be bonded to only a part of the outer periphery of the bonding portion 112, 112A. Even in this case, the heat-sealable film 120, 120A is bonded to the entire outer periphery of the bonding portion 112, 112A by heat-sealing the valve device 100, 100A to the housing 200.

### <3-5>

In Embodiments 1 and 2 described above, the heat-sealable film 120, 120A is provided as an adhesive member separately from the valve device main body 110, 110A, and the heat-sealable film 120, 120A is bonded to the entire outer periphery of the bonding portion 112, 112A of the valve device main body 110, 110A to form the valve device 100, 100A. However, an adhesive resin comparable in bondability to the heat-sealable film 120, 120A can be poured to the entire outer periphery of the bonding portion 112, 112A of the valve device main body 110, 110A to form a valve device having an outer cross-sectional shape as in, for example, Figs 3 and 9. Even in this case, by heat-sealing the valve device 100, 100A to the housing 200, a layer including an adhesive resin which is an adhesive member is bonded to a heat-sealable resin layer which is the inner layer of the housing 200.

### <3-6>

In Embodiments 1 and 2 described above, first heat sealing (primary heat sealing) with the valve device 100, 100A sandwiched between flange portions of the housing 200 and subsequent second heat sealing (secondary heat sealing) for further consolidating the seal at the periphery of the valve device 100, 100A are performed as a procedure for attaching the valve device 100, 100A to the housing 200, but it is also possible to attach the valve device 100, 100A to the housing 200 by solidly heat-sealing the periphery of the valve device 100, 100A only by the first heat sealing (primary heat sealing). Further, welding is performed by a heat sealing method, but a method such as ultrasonic sealing or sealing by induction heating may be employed because it suffices that bonding can be performed by applying an amount of heat to melt the resin.

### EXAMPLES

Hereinafter, the present disclosure will be described in detail by way of examples and comparative examples. However, the present disclosure is not limited to examples.

In examples and comparative examples, measurement of the melting peak temperature and measurement of the heat shrinkage ratio were performed as follows.

### (Measurement of melting peak temperature)

Measurement was performed using a differential scanning calorimeter (DSC). As an apparatus, "DSC-60 Plus" manufactured by Shimadzu Corporation was used. In addition, for measurement conditions, the temperature rise rate was 10°C/min, the temperature measurement range is from -50 to 200°C, and an aluminum pan was used as a sample pan.

### (Measurement of heat shrinkage ratio)

The heat shrinkage ratio of the heat-sealable film was measured by a method conforming to JIS K 7133: 1999. The heat-sealable film was cut to a size of 100 mm in length (MD) × 100 mm in width (TD) to obtain a test piece. Next, the test piece was left to stand in an oven set at a temperature of 200°C, was heated for 10 minutes, and then taken out from the oven, and the heat shrinkage ratio (%) in each of the machine direction and transverse direction was measured. The heat shrinkage ratio was a result of measurement at a portion having the largest heat shrinkage ratio in each of MD and TD. The results are shown in Table 1.

### <Manufacturing of heat-sealable film>

### (Example 1)

As a heat-resistant resin film layer, a polyarylate nonwoven fabric (outer thickness: 45 µm, areal weight: 14 g/m², melting peak temperature: higher than 300°C) was provided. Next, as a thermoplastic resin film layer, maleic anhydride-modified block-based polypropylene (melting peak temperature: 140°C) was laminated to each of both surfaces of the polyarylate nonwoven fabric by an extrusion lamination method to manufacture a heat-sealable film in which acid-modified polypropylene (42 µm), a polyarylate nonwoven fabric (areal weight: 14 g/m²) and acid-modified polypropylene (42 µm) are laminated in this order. Since the polyarylate nonwoven fabric is impregnated with the maleic anhydride-modified polypropylene, the thickness of the entire heat-sealable film is 100 µm.

### (Example 2)

As a heat-resistant resin layer, a polyethylene naphthalate film (12 µm, melting peak temperature 268°C) was provided. Next, as a thermoplastic resin film layer, maleic anhydride-modified homo-based polypropylene (melting peak temperature: 140°C) was laminated to each of both surfaces of the polyethylene naphthalate film by an extrusion lamination method to manufacture a heat-sealable film in which acid-modified polypropylene (44 µm), a polyethylene naphthalate film (12 µm) and acid-modified polypropylene (44 µm) are laminated in this order. The surface of the polyethylene naphthalate film is coated with triphenylmethane-4,4',4"-triisocyanate as an adhesion promoter layer.

### (Example 3)

A polyolefin nonwoven fabric (thickness: 100 µm, areal weight: 15 g/m² and melting peak temperature: 160°C) was used as a heat-sealable film. As the polyolefin nonwoven fabric, one having a particularly small heat shrinkage ratio was selected.

### (Example 4)

A nylon nonwoven fabric (thickness: 200 µm, areal weight: 20 g/m² and melting peak temperature: 225°C) was used as a heat-sealable film. As the nylon nonwoven fabric, one having a particularly small heat shrinkage ratio was selected.

### (Example 5)

A polyethylene terephthalate (PET) nonwoven fabric (thickness: 160 µm, areal weight: 30g /m² and melting peak temperature: 255°C) was used as a heat-sealable film. As the polyethylene terephthalate (PET) nonwoven fabric, one having a particularly small heat shrinkage ratio was selected.

### (Example 6)

A polyethylene terephthalate (PET) nonwoven fabric (thickness: 130 µm, areal weight: 20g /m² and melting peak temperature: 255°C) was used as a heat-sealable film. As the polyethylene terephthalate (PET) nonwoven fabric, one having a particularly small heat shrinkage ratio was selected.

### (Example 7)

A polyethylene terephthalate (PET) nonwoven fabric (thickness: 190 µm, areal weight: 60g /m² and melting peak temperature: 240°C) was used as a heat-sealable film. As the polyethylene terephthalate (PET) nonwoven fabric, one having a particularly small heat shrinkage ratio was selected.

### (Example 8)

A polyethylene terephthalate (PET) nonwoven fabric (thickness: 340 µm, areal weight: 80g /m² and melting peak temperature: 240°C) was used as a heat-sealable film. As the polyethylene terephthalate (PET) nonwoven fabric, one having a particularly small heat shrinkage ratio was selected.

### (Example 9)

A polyethylene terephthalate (PET) nonwoven fabric (thickness: 410 µm, areal weight: 90g /m² and melting peak temperature: 240°C) was used as a heat-sealable film. As the polyethylene terephthalate (PET) nonwoven fabric, one having a particularly small heat shrinkage ratio was selected.

### (Example 10)

A polybutylene terephthalate (PBT) film (thickness: 40 µm and melting peak temperature: 225°C) was used as a heat-sealable film. As the polybutylene terephthalate (PBT) film, one having a particularly small heat shrinkage ratio was selected.

### (Example 11)

A polybutylene terephthalate (PBT) film (thickness: 50 µm and melting peak temperature: 225°C) was used as a heat-sealable film. As the polybutylene terephthalate (PBT) film, one having a particularly small heat shrinkage ratio was selected.

### (Example 12)

A polyethylene naphthalate (PEN) film (thickness: 12 µm and melting peak temperature: 268°C) was used as a heat-sealable film. As the polyethylene naphthalate (PEN) film, one having a particularly small heat shrinkage ratio was selected.

### (Example 13)

A polyethylene terephthalate (PET) film (thickness: 12 µm and melting peak temperature: 268°C) was used as a heat-sealable film. As the polyethylene terephthalate (PET) film, one having a particularly small heat shrinkage ratio was selected.

### (Example 14)

A polyarylate nonwoven fabric (thickness: 7 µm, areal weight: 14g /m² and melting peak temperature: more than 300°C) was used as a heat-sealable film. As the polyethylene terephthalate (PET) nonwoven fabric, one having a particularly small heat shrinkage ratio was selected.

### (Comparative Example 1)

A polyolefin nonwoven fabric (thickness: 120 µm, areal weight: 15 g/m² and melting peak temperature: 160°C) was used as a heat-sealable film. As the polyolefin nonwoven fabric, one having a small heat shrinkage ratio was selected.

### (Comparative Example 2)

A polylactic acid nonwoven fabric (thickness: 100 µm, areal weight: 20 g/m² and melting peak temperature: 170°C) was used as a heat-sealable film. As the polyolefin nonwoven fabric, one having a small heat shrinkage ratio was selected.

### (Comparative Example 3)

An stretched polypropylene (CPP) film (thickness: 40 µm and melting peak temperature: 160°C) was used as a heat-sealable film. As the unstretched polypropylene (CPP) film, one having a particularly small heat shrinkage ratio was selected.

### (Comparative Example 4)

A random-based polypropylene film (40 µm, melting peak temperature 140°C) was provided. Next, as a thermoplastic resin film layer, maleic anhydride-modified random-based polypropylene (melting peak temperature: 140°C) was laminated to one surface of the homopolypropylene film by an extrusion lamination method to manufacture a heat-sealable film in which acid-modified polypropylene (PPa) (40 µm) and a polypropylene (PP) film (40 µm) are laminated.

### (Evaluation of attachability of heat-sealable film to valve device)

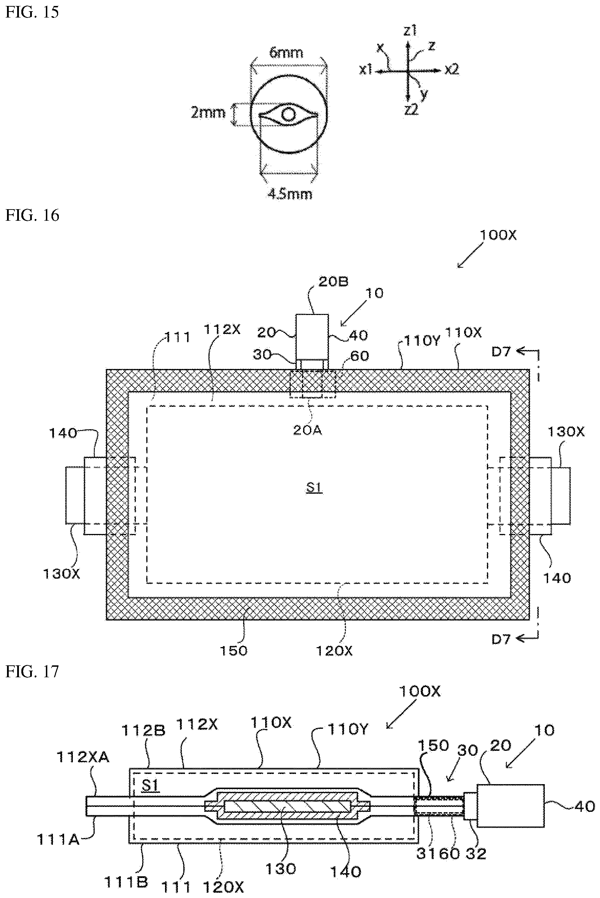

As the valve device, one having a shape and a size as shown in Figs. 14 and 15 was provided. A heat-sealable film attachment portion of the valve device is formed of aluminum. Next, the outer surface of the valve device was treated (phosphoric acid chromate treatment) with a treatment liquid containing the three components of a phenol resin, a chromium (trivalent) nitrate compound and phosphoric acid. Next, the attachment portion (outer periphery) of the valve device was sandwiched between two heat-sealable films (length: 10 mm and width: 20 mm), and in this state, the heat-sealable film was heat-sealed to the attachment portion of the valve device under conditions of 190°C, 2 minutes and 0.03 MPa using a heat seal bar. The shape of the heat-sealable film after heat sealing was visually observed, and the attachability of the heat-sealable film to the valve device was evaluated in accordance with the following criteria. The results are shown in Table 1.
A: There is little change in shape of the heat-sealable film, and the heat-sealable film is heat-sealed to a predetermined place on the valve device. Further, the heat-sealable film has high flexibility, and is heat-sealed following the shape of the valve device.
B: There is little change in shape of the heat-sealable film, and the heat-sealable film is heat-sealed to a predetermined place on the valve device, but the heat-sealable film has low flexibility, and is difficult to heat-seal following the shape of the valve device.
C: There is a significant change in shape of the heat-sealable film, and the heat-sealable film attached to the valve device is located away from a predetermined location, and cannot be appropriately attached to the valve device.

**[Table 1]**

| Table 1 | Heat-sealable film | | | | | | |
|---|---|---|---|---|---|---|---|
| | Configuration Numerical value in parenthesis indicates thickness (µm) | Thickness (µm) | Areal weight of nonwoven fabric (g/m²) | Melting peak temperature (°C) | Thermal shrinkage ratio (%) | | Evaluation of attachability to valve device |
| | | | | | MD | TD | |
| Example 1 | PPa/Polyarylate nonwoven fabric/PPa | 100 | 14 | 300 < | 0.8 | 0.8 | A |
| Example 2 | PPa (44)/PEN (12)/PPa (44) | 100 | - | 268 | 2.5 | 2.1 | B |
| Example 3 | Polyolefin nonwoven fabric single layer | 100 | 15 | 160 | 6.8 | 2.1 | A |
| Example 4 | Nylon nonwoven fabric single layer | 200 | 20 | 225 | 1.5 | 1.0 | A |
| Example 5 | PET nonwoven fabric single layer | 160 | 30 | 255 | 3.9 | 0.8 | A |
| Example 6 | PET nonwoven fabric single layer | 130 | 20 | 255 | 3.8 | 1.5 | A |
| Example 7 | PET nonwoven fabric single layer | 190 | 60 | 240 | 2.2 | 0.6 | A |
| Example 8 | PET nonwoven fabric single layer | 340 | 80 | 240 | 2.0 | 0.1 | A |
| Example 9 | PET nonwoven fabric single layer | 410 | 90 | 240 | 3.9 | 0.7 | A |
| Example 10 | PBT film single layer | 40 | - | 225 | 0.5 | 0.0 | B |
| Example 11 | PBT film single layer | 50 | - | 220 | 0.8 | 0.5 | B |
| Example 12 | PEN film single layer | 12 | - | 268 | 1.6 | 1.4 | B |
| Example 13 | PET film single layer | 12 | - | 255 | 2.9 | 0.7 | B |
| Example 14 | Polyarylate nonwoven fabric single layer | 7 | 14 | 300 < | 0.3 | 0.3 | A |
| Comparative Example 1 | Polyolefin nonwoven fabric single layer | 120 | 15 | 160 | 5.8 | 7.2 | c |
| Comparative Example 2 | Polylactic acid nonwoven fabric single layer | 100 | 20 | 170 | 81.0 | 61.3 | c |
| Comparative Example 3 | CPP film single layer | 40 | - | 160 | 90.0 | 0.5 | c |
| Comparative Example 4 | PPa (40)/PP (40) | 80 | - | 140 | 81.6 | 2.3 | c |

### [Embodiment 3]

Hereinafter, a valve structure for a power storage device according to Embodiment 3, a power storage device including the valve structure, and a method for manufacturing thereof will be described with reference to the drawings.

### <3-1. Overview>

Patent Document 1 (Japanese Patent Laid-open Publication No. 2016-31934) discloses a battery in which a battery element is housed in a pouch. A valve structure is attached to a heat-sealing portion formed along a peripheral edge of the pouch. The valve structure includes a hollow body and a functional component housed in the body. The functional component is configured to be actuated and perform degassing if the internal pressure of the pouch increased to a pressure equal to or greater than a certain level.

A heat-sealing film may be interposed between the valve structure and the pouch for more solidly joining the valve structure and the pouch to each other. The heat-sealing film is made of a material that can be heat-sealed to the body of the valve structure and a packaging material forming the pouch. However, if the heat-sealing film is sealed to the body of the valve structure, the functional component housed in the body may be damaged because the temperature of the body becomes high.

An object of the present disclosure is to provide a method for manufacturing a valve structure for a power storage device in which a functional component is unlikely to be damaged, and a valve structure manufactured by this manufacturing method.

### <3-2. Overall configuration of power storage device>

Fig. 16 is a plan view of a power storage device 100X including a valve structure 10 for a power storage device according to Embodiment 3. Fig. 17 is a sectional view taken along line D17-D17 in Fig. 16. In these drawings, portions that are normally invisible from the outside are partially indicated by dotted lines for reference. Hereinafter, unless otherwise specified, the longitudinal direction and the horizontal direction in Fig. 16 are referred to as "longitudinal" and "horizontal", respectively, and the vertical direction in Fig. 17 is referred to as "vertical", for convenience of explanation. However, the direction of the power storage device 100X during use is not limited thereto.

The power storage device 100X includes a housing 110X, a power storage device element 120X, a tab 130X, and a tab film 140. The housing 110X includes an internal space S1 and a peripheral edge seal portion 150. The power storage device element 120X is housed in the internal space S1 of the housing 110X. One end of the tab 130X is joined to the power storage device element 120X, the other end of the tab protrudes outward from the peripheral edge seal portion 150 of the housing 110X, and a part of the region between the one end and the other end is sealed to the peripheral edge seal portion 150 with the tab film 140 interposed therebetween.

The housing 110X includes a case 110Y. The case 110Y includes packaging materials 111 and 112X. At the outer peripheral portion of the case 110Y in plan view, the packaging materials 111 and 112X are sealed to each other by, for example, heat sealing to forms the peripheral edge seal portion 150. An internal space S1 of the case 110Y, which is cut off from the external space, is formed by the peripheral edge seal portion 150. The peripheral edge seal portion 150 defines a peripheral edge of the internal space S1 of the case 110Y. The form of the heat sealing mentioned here is assumed to be sealing by heating from a heat source. The packaging materials 111 and 112X may be sealed to each other by, for example, ultrasonic sealing to form the peripheral edge seal portion 150. In any case, the peripheral edge seal portion 150 means a portion in which the packaging materials 111 and 112X are sealed to each other to be integrated. As shown in Fig. 17, the packaging material 112X, the tab 130X, a pair of tab films 140 and the packaging material 111 are integrated at a portion of the peripheral edge seal portion 150 where the tab 130X and the tab film 140 are sandwiched, and the packaging material 112X, a pair of tab films 140 and the packaging material 111 are integrated at a portion of the peripheral edge seal portion 150 where only a pair of tab films 140 is sandwiched.

The packaging materials 111 and 112X include, for example, a resin molded article or a film. The resin molded article mentioned here can be manufactured by a method such as injection molding, compressed-air molding, vacuum molding or blow molding, where in-mold molding may be performed for imparting a design property, and functionality. The type of the resin may be polyolefin, polyester, nylon, ABS, or the like. The film mentioned here is, for example, a resin film that can be manufactured by a method such as an inflation method or a T-die method, or a film obtained by laminating such a resin film on a metal foil. The film mentioned here may be a stretched film, and may be a single layer film or multiple layer film. The multiple layer film mentioned here may be manufactured by a coating method, may be obtained by bonding a plurality of films with an adhesive or the like, or may be manufactured by a multilayer extrusion method.

The packaging materials 111 and 112X can be formed in various ways as described above, and include a laminate film in Embodiment 3. The laminate film can be a laminate obtained by laminating a base material layer, a barrier layer and a heat-sealable resin layer. The base material layer functions as a base material of the packaging materials 111 and 112X, and is typically a resin layer forming an outer layer of the case 110Y and having insulation quality. The barrier layer has functions of improving the strength of the packaging materials 111 and 112X and preventing at least ingress of moisture, among others, into the power storage device 100X. The barrier layer is typically a metal layer made of an aluminum alloy foil or the like. The heat-sealable resin layer is typically made of a heat-sealable resin such as polyolefin, and forms the innermost layer of the case 110Y.

The shape of the case 110Y is not particularly limited, and can be, for example, a bag shape (pouch shape). The bag shape mentioned here may be of three-way seal type, four-way seal type, pillow type, gusset type or the like. However, the case 110Y of Embodiment 3 has a shape as in Fig. 17, and is manufactured by heat-sealing the packaging material 111 molded in a tray shape and the packaging material 112X also molded in a tray shape and superposed on the packaging material 111, along the outer peripheral portion in plan view. The packaging material 111 includes an angular ring-shaped flange portion 111A corresponding to an outer peripheral portion in plan view, and a molded part 111B which is continuous with the inner edge of the flange portion 111A and extends downward therefrom. Similarly, the packaging material 112X includes an angular ring-shaped flange portion 112XA corresponding to an outer peripheral portion in plan view, and a molded part 112B which is continuous with the inner edge of the flange portion 112XA and extends upward therefrom. The packaging materials 111 and 112X are superposed such that the molded parts 111B and 112B extend in opposite directions. In this state, the flange portion 111A of the packaging material 111 and the flange portion 112XA of the packaging material 112X are heat-sealed so as to be integrated with each other, resulting in formation of the peripheral edge seal portion 150. The peripheral edge seal portion 150 extends over the entire outer periphery of the case 110Y and is formed in an angular ring shape. One of the packaging materials 111 and 112X may have a sheet shape.

The power storage device element 120X includes at least a positive electrode, a negative electrode and an electrolyte, and is, for example, a power storage member of a lithium ion battery (secondary battery), a capacitor, or the like. If the power storage device element 120X becomes abnormal, gas may be generated in the internal space S1 of the case 110Y. In the case where the power storage device 100X is a lithium ion battery, gases such as a volatilized organic solvent, carbon monoxide, carbon dioxide, methane, ethane, hydrogen and hydrogen fluoride may be generated in the internal space S1 of the case 110Y by volatilization of the organic solvent as an electrolyte and decomposition of the electrolytic solution. In the case where the power storage device 100X is a capacitor, gas may be generated in the internal space S1 of the case 110Y by a chemical reaction in the capacitor. The power storage device 100X may be an all-solid-state battery, and in this case, the power storage device element 120X may contain a solid electrolyte that may generate gas. For example, in the case where the solid electrolyte is sulfide-based substance, gas of hydrogen sulfide may be generated.

The tab 130X is a metal terminal used for inputting and outputting electric power to and from the power storage device element 120X. The tabs 130X are disposed, respectively, at the end parts of the peripheral edge seal portion 150 of the case 110Y in a horizontal direction, with one tab forming a terminal on the positive electrode side and the other forming a terminal on the negative electrode side. One end part of each tab 130X in the horizontal direction is electrically connected to an electrode (positive electrode or negative electrode) of the power storage device element 120X in the internal space S1 of the case 110Y, and the other end part protrudes outward from the peripheral edge seal portion 150. The above form of the power storage device 100X is particularly preferable uses in, for example, an electrically driven vehicle such as an electric vehicle or a hybrid vehicle in which a large number of power storage devices 100X are connected in series and used at a high voltage. The locations of attachment of the two tabs 130X forming the terminals of the positive electrode and the negative electrode are not particularly limited, and for example, the tabs may be disposed on the same side of the peripheral edge seal portion 150.

The metal material forming the tab 130X is, for example, aluminum, nickel, or copper. When the power storage device element 120X is a lithium ion battery, the tab 130X connected to the positive electrode is typically made of aluminum or the like, and the tab 130X connected to the negative electrode is typically made of copper, nickel or the like.

The left tab 130X is sandwiched between the packaging materials 111 and 112X with the tab film 140 interposed between the tab and the packaging materials at the left end part of the peripheral edge seal portion 150. The right tab 130X is sandwiched between the packaging materials 111 and 112X with the tab film 140 interposed between the tab and the packaging materials at the right end part of the peripheral edge seal portion 150.

The tab film 140 is a so-called adhesive film, and is configured to be bonded to both the packaging materials 111 and 112X and the tab 130X (metal). By interposing the tab film 140, the tab 130X and the innermost layer (heat-sealable resin layer) of the packaging materials 111 and 112X can be fixed even if the former and the latter are made of different materials. The tab film 140 is sealed and fixed to the tab 130X to integrate the tab film and the tab in advance, and the tab 130X to which the tab film 140 is fixed is sandwiched between the packaging materials 111 and 112X and sealed to perform integration as shown in Fig. 17.

If gas is generated in the internal space S1 of the case 110Y with the operation of the power storage device 100X, the pressure of the internal space S1 gradually increases. If the pressure of the internal space S1 excessively increases, the case 110Y may be broken, leading to damage to the power storage device 100X. The housing 110X includes a valve structure 10 as a mechanism for preventing such a situation. The valve structure 10 is a degassing valve for adjusting the pressure of the internal space S1, and is attached to, for example, the peripheral edge seal portion 150 of the case 110Y. Hereinafter, the configuration of the valve structure 10 will be described in detail.

### <3-3. Configuration of valve structure>

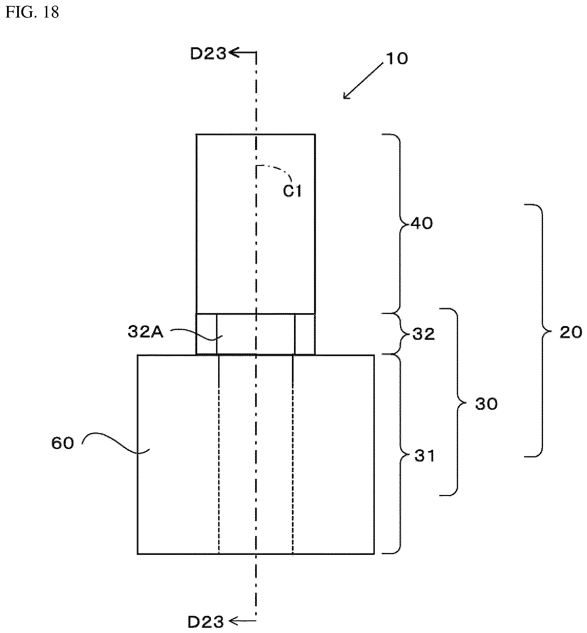

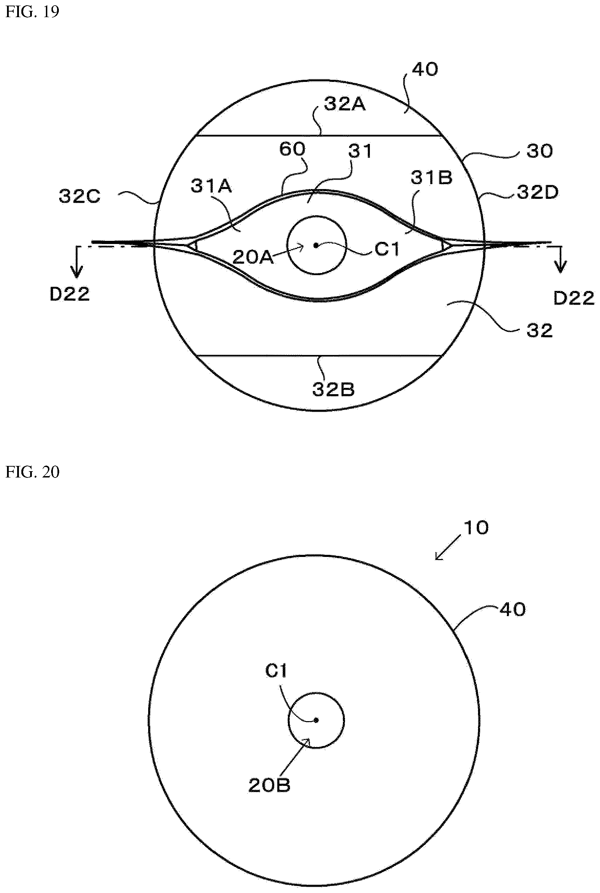

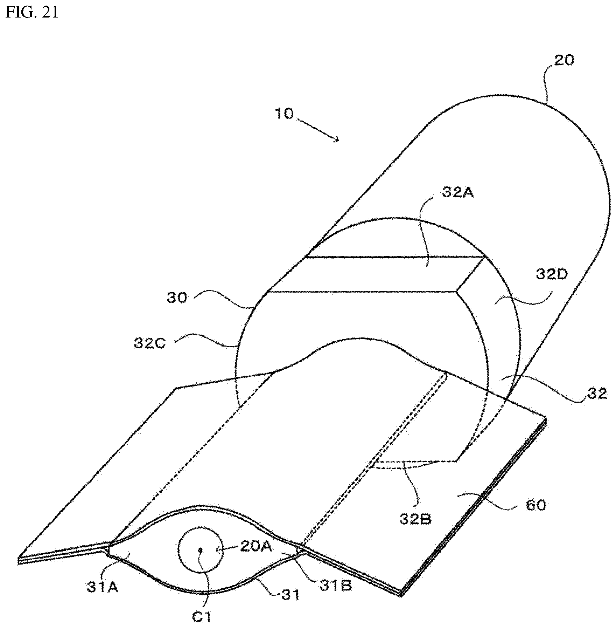

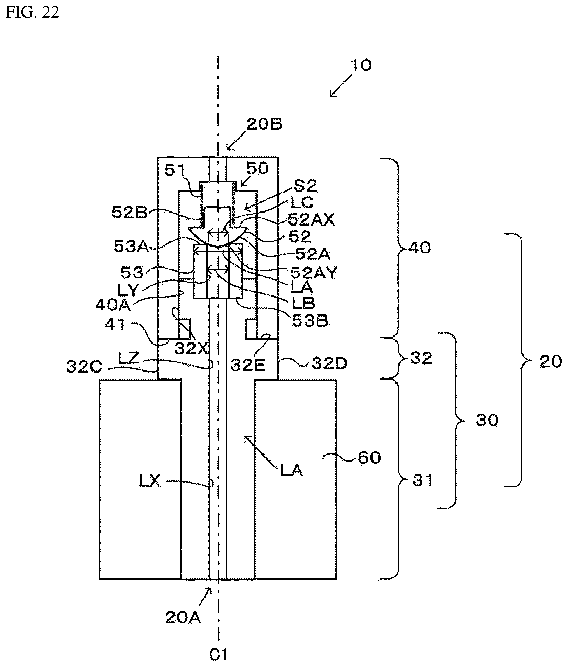

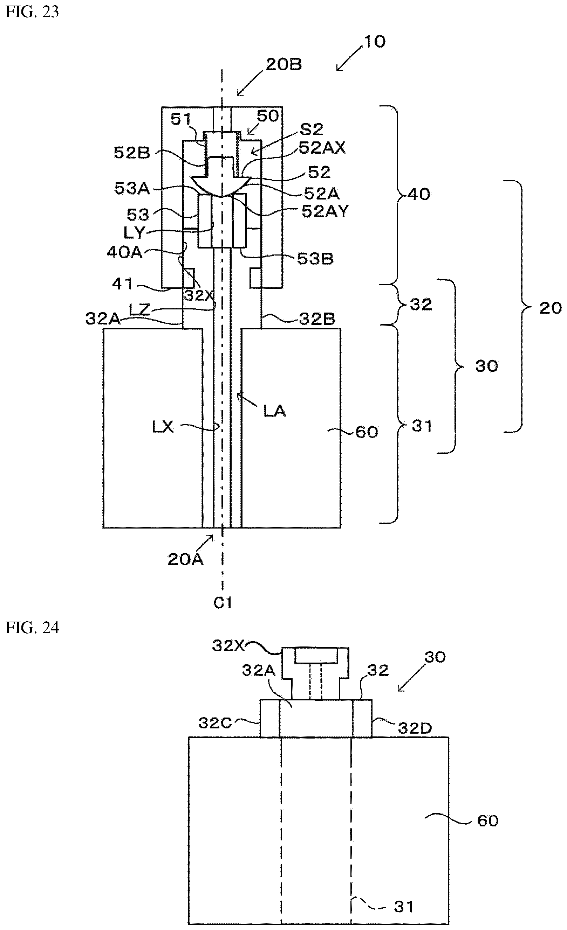

Fig. 18 is a plan view of the valve structure 10. The valve structure 10 includes a valve main body 20 and a heat-sealing film 60. The valve main body 20 includes a first body 30, a second body 40, and a functional component 50 (see Figs. 22 and 23). In Embodiment 3, the first body 30 and the second body 40 are continuously disposed in this order in a direction from the inside to the outside of the case 110Y (see Fig. 16) (a direction from the rear side to the front side). FIG. 19 is a view of the valve structure 10 viewed from the first body 30 side (from the rear side). FIG. 20 is a view of the valve structure 10 viewed from the second body 40 side (from the front side). FIG. 21 is a perspective view of the valve structure 10 viewed from the first body 30 side (from the rear side).

Fig. 22 is a sectional view taken along line D22-D22 in Fig. 19. Fig. 23 is a sectional view taken along line D23-D23 in Fig. 18. As shown in Figs. 7 and 8, the functional component 50 is housed in a housing space S2 defined by the first body 30 and the second body 40. In Embodiment 3, the functional component 50 forms, for example, a check valve capable of performing degassing repeatedly. The functional component 50 is opened so that gas generated in the case 110Y (see Fig. 16) passes from the inner side to the outer side of the case 110Y If the internal pressure of the case 110Y is caused to increase by the gas. More specifically, the functional component 50 forms a relief valve that switches between an open state and a closed state according to the pressure on the primary side, that is, the pressure of the internal space S1 (see Fig. 16). A passage LA is formed in the housing space S2 inside the valve main body 20. The passage LA is a passage allowing communication between the inside and the outside of the case 110Y, and has an inlet 20A facing the internal space S1 of the case 110Y and an outlet 20B facing the external space.

The functional component 50 is disposed so as to close the passage LA in a closed state. If the pressure of the internal space S1 is caused to increase by gas generated in the internal space S1, the functional component 50 is opened, so that the gas passes from the primary side to the secondary side, that is, from the internal space S1 to the external space. The functional component 50 seals the internal space S1 against the external space in a closed state.

The first body 30 includes an attachment portion 31 and a connection portion 32. The attachment portion 31 is a portion for attaching the valve structure 10 to the case 110Y. During molding of the case 110Y, the attachment portion 31 is heat-sealed together with the packaging materials 111 and 112X with the heat-sealing film 60 interposed therebetween. By the heat sealing, the outer peripheral surface of the attachment portion 31 is sealed and fixed to the packaging materials 111 and 112X with the heat-sealing film 60 interposed therebetween, and the attachment portion 31 is fixed to the peripheral edge seal portion 150 in such a manner as to be sandwiched between the packaging materials 111 and 112X (see Fig. 17).

The connection portion 32 is disposed outside the peripheral edge seal portion 150 and is not sandwiched between the packaging materials 111 and 112X (see Figs. 16 and 17). The second body 40 disposed further outside of the connection portion 32 is also disposed outside the peripheral edge seal portion 150 and is not sandwiched between the packaging materials 111 and 112X. As a result, the possibility is reduced that the functional component 50 held by the second body 40 is broken due to, for example, deformation by heat during attachment of the attachment portion 31 to the case 110Y by heat sealing.

The attachment portion 31, the connection portion 32 and the second body 40 coaxially extend. The attachment portion 31, the connection portion 32 and the second body 40 have a common central axis C1. The attachment portion 31 has a first ventilation passage LX, the second body 40 has a second ventilation passage LY, and the connection portion 32 has a third ventilation passage LZ. These ventilation passages LX to LZ also coaxially extend with the central axis C1 as a central axis. In Embodiment 3, the inlet 20A and the outlet 20B are disposed not on the outer peripheral surface of the valve main body 20 but on the end surface in the longitudinal direction, and in particular, the central axis C1 linearly extending in the longitudinal direction passes through the centers of the inlet 20A and the outlet 20B. The shape of a cross-section orthogonal to the central axis C1 of the ventilation passages LX to LZ is a circular shape, but is not limited thereto. The ventilation passages LX to LZ communicate with one another and form a passage LA as a whole. The third ventilation passage LZ is disposed on the outer side of the first ventilation passage LX with respect to the case 110Y. The second ventilation passage LY is disposed on the outer side of the third ventilation passage LZ with respect to the case 110Y.

As shown in Figs. 19 and 21, the attachment portion 31 has a non-circular outer shape when viewed in a direction along which the central axis C1 extends. More specifically, when viewed in a direction along which the central axis C1 extends, the attachment portion 31 has a first wing-shaped portion 31A formed so as to become thinner as the leftward distance from the central part in the horizontal direction increases, and a second wing-shaped portion 31B formed so as to become thinner as the rightward distance from the central part in the horizontal direction increases. Thus, in Embodiment 3, the attachment portion 31 becomes thicker as approaching the central part of the power storage device 100X in the width direction (horizontal direction), and becomes thinner as approaching the end part of the power storage device 100X in the width direction (horizontal direction).

In Embodiment 3, since the first wing-shaped portion 31A and the second wing-shaped portion 31B are formed, the outer peripheral surface of the attachment portion 31 draws a smooth curved surface in both the lower half part covered with the packaging material 111 and the upper half part covered with the packaging material 112X. For example, as compared to a case where the attachment portion 31 is formed in a cylindrical shape, a change in thickness of the power storage device 100X in the vertical direction is made smoother by the first wing-shaped portion 31A and the second wing-shaped portion 31B at a location between a portion of the peripheral edge seal portion 150 in which the attachment portion 31 is not sandwiched and a portion of the peripheral edge seal portion 150 in which the attachment portion 31 is sandwiched. As a result, an excessive force is not applied to the packaging materials 111 and 112X in a portion around a location at which the attachment portion 31 is attached in the peripheral edge seal portion 150. Thus, attachment portion 31 can be solidly fixed to the peripheral edge seal portion 150 with the heat-sealing film 60 interposed therebetween.

The outer shape of the connection portion 32 generally has a shape obtained by cutting off a part of a circular column having the central axis C1 as a central axis. More specifically, the outer shape of the connection portion 32 generally has a shape such that a circular column having the central axis C1 as a central axis is cut on a plane at a certain distance from the central axis C1, and further cut on a plane at a location symmetrical to the foregoing plane with respect to the central axis C1. Thus, the connection portion 32 has a first plane 32A and a second plane 32B as a pair of planes. The first plane 32A and the second plane 32B are parallel (or substantially parallel; the same applies hereinafter) to each other. The first plane 32A and the second plane 32B are parallel (or substantially parallel; the same applies hereinafter) to a direction in which the central axis C1 extends. In Embodiment 3, the first plane 32A and the second plane 32B are parallel (or substantially parallel; the same applies hereinafter) to a direction in which the peripheral edge seal portion 150 extends. The outer peripheral surface of the connection portion 32 is formed by the first plane 32A and the second plane 32B, and the curved surfaces 32C and 32D connecting the first plane 32A and the second plane 32B. The curved surfaces 32C and 32D each have an arc shape centered at the central axis C1 when viewed along a direction in which the central axis C1 extends, and the curved surfaces each overlap the outer shape of the second body 40. The connection portion 32 as described above can be formed by cutting off the outer peripheral surface of a cylindrical member so as to form the first plane 32A and the second plane 32B.

The second body 40 has a cylindrical shape and defines, together with the first body 30, a housing space S2 for housing the functional component 50. The first body 30 and the second body 40 are combined with each other with the functional component 50 housed in the housing space S2. A coupling mode between the first body 30 and the second body 40 is, for example, at least one of coupling with an adhesive, coupling by a screw structure, and coupling by uneven engagement. In Embodiment 3, the first body 30 and the second body 40 are coupled by the engagement between a male screw 32X (see Fig. 22) formed on the outer surface of the connection portion 32 of the first body 30 and a female screw 40A (see Fig. 22) formed on the inner surface of the second body 40, and an adhesive applied to the male screw 32X and the female screw 40A. The material of the adhesive is not particularly limited, and the adhesive can be formed from an acid-modified polyolefin and an epoxy resin. Such an adhesive is superior in that degradation of bonding performance by an electrolytic solution housed in the case 110Y can be suppressed as compared to, for example, a case where an adhesive made of a modified silicon resin is used.

Thus, in Embodiment 3, when viewed along a direction in which the central axis C1 extends, the attachment portion 31, the connection portion 32 and the second body 40 have different outer shapes according to roles assigned to respective portions.

The second body 40 holds a portion having a main structure for exerting a function as a degassing valve of the valve structure 10. In Embodiment 3, the functional component 50 includes a spring 51 as a valve mechanism housed in the second ventilation passage LY in the second body 40, a valve body 52, and a valve seat 53. The spring 51, the valve body 52 and the valve seat 53 are arranged in this order from the outlet 20B to the inlet 20A in the second ventilation passage LY. In Embodiment 3, the second body 40 and the valve seat 53 are formed as separate components as shown in Figs. 22 and 23, but they may be integrally formed.

The valve seat 53 receives the valve body 52 biased from the outside by the spring 51, and at this time, a closed state of the valve structure 10 is formed. The spring 51 is, for example, a coil spring, but is not limited thereto, and can be, for example, a leaf spring. In Embodiment 3, the valve seat 53 has a cylindrical shape extending with the central axis C1 as a central axis, and has a top surface 53A defining a front end surface and a bottom surface 53B defining a rear end surface in a longitudinal direction. The valve body 52 includes a hemispherical contact portion 52A, and a cylindrical shaft portion 52B which is continuous with a front end surface 52AX of the contact portion 52A in the longitudinal direction and extends forward from the central portion of the end surface 52AX. The bottom surface 52AY, which is a rear end surface of the contact portion 52A in the longitudinal direction, is received by the top surface 53A of the valve seat 53, and comes into contact with the top surface 53A in a closed state of the functional component 50. The spring 51 extends spirally with the central axis C1 as a central axis. The shaft portion 52B in the valve body 52 is inserted into a space inside the spring 51 to connect the valve body 52 and the spring 51 to each other. The valve body 52 may have, for example, a ball shape.

The valve seat 53 and the first body 30 can be bonded to each other with, for example, an adhesive. A material of the adhesive is not particularly limited, and a preferred example when the valve seat 53 is made of fluorine rubber and the first body 30 is made of metal such as aluminum the adhesive is the same as the adhesive exemplified in coupling of the first body 30 and the second body 40. From the viewpoint of preventing the valve structure 10 from being opened, an adhesive can be appropriately applied to various other portions. For example, an adhesive can be applied between the rear end surface 41 of the second body 40 and the front end surface 32E of the connection portion 32.

As a non-limiting example, it is possible to set the diameter LA of the top surface 53A of the valve seat 53 to 4.0 mm, and set the diameter LB of the central opening of the top surface 53A to 1.5 mm. The contact surface between the top surface 53A of the valve seat 53 and the bottom surface 52AY of the valve body 52 has a spherical shape, and in Embodiment 3, a radial width LC of such a spherical contact surface is 1.25 mm. From the viewpoint of enhancing the airtightness (barrier property) between the valve body 52 and the valve seat 53, the radial width LC of each of the spherical contact surfaces of the bottom surface 52AY and the top surface 53A is preferably 0.75 mm or more, more preferably 1.0 mm or more. On the other hand, from the viewpoint of downsizing the functional component 50, suppressing sticking of the bottom surface 52AY and the top surface 53A to each other, and facilitating control of valve opening, the radial width LC of each of the spherical contact surfaces of the bottom surface 52AY and the top surface 53A is preferably 15 mm or less, more preferably 8.0 mm or less.

From the viewpoint of enhancing the airtightness (barrier property) between the valve body 52 and the valve seat 53, the diameter LB of the central opening of the top surface 53A of the valve seat 53 is preferably 10 mm or less, more preferably 5.0 mm or less. On the other hand, from the viewpoint of facilitating processing, the diameter LB of the central opening of the top surface 53A of the valve seat 53 is preferably 1.0 mm or more, more preferably 1.5 mm or more.

The attachment portion 31 is fixed to the peripheral edge seal portion 150 in such a manner that gas generated in the internal space S1 of the case 110Y flows into the first ventilation passage LX. That is, the first ventilation passage LX inside the attachment portion 31 communicates with the internal space S1 of the case 110Y. Therefore, when the pressure of the internal space S1, that is, the pressure of the space on the primary side of the functional component 50 reaches a predetermined pressure, the gas flowing out of the internal space S1 and passing through the first ventilation passage LX and the third ventilation passage LZ presses the valve body 52 to the outlet 20B side. When the valve body 52 is pressed and the valve body 52 is separated from the valve seat 53, the spring 51 is deformed, so that the valve body 52 moves to the outlet 20B side, and an open state of the functional component 50 is formed. In this open state, the gas generated in the internal space S1 flows out toward the outlet 20B through a gap formed between the valve body 52 and the valve seat 53, and is discharged to the external space. When in this way, the gas in the internal space S1 is discharged through the passage LA, the pressure on the internal space S1 side, which presses the valve body 52 to the outlet 20B side, decreases, and is exceeded by the force of the spring 51 biasing the valve body 52 to the inlet 20A side. As a result, the shape of the spring 51 is restored, and a closed state of the functional component 50 is formed again. The valve opening pressure of the functional component 50 can be appropriately set. For example, the valve opening pressure of the functional component 50 can be set to 0.1 MPa. Since the functional component 50 is opened if the pressure on the primary side is higher than the pressure on the secondary side, the valve opening pressure is a differential pressure obtained by subtracting the pressure on the secondary side from the pressure on the primary side.

In the closed state, the functional component 50 can prevent ingress of atmospheric air from the external space into the internal space S1 of the case 110Y. After the functional component 50 is opened once, the internal space S1 is kept at a relatively high pressure equal to or higher than the atmospheric pressure, so that ingress of atmospheric air into the internal space S1 is particularly unlikely to occur. The valve structure 10 can effectively prevent ingress of atmospheric air into the internal space S1 by the functional component 50 described above, so that degradation of the power storage device element 120X by moisture or the like contained in the air can be prevented. In an open state of the functional component 50, ingress of atmospheric air into the internal space S1 is also unlikely to occur. This is because, in an open state, the pressure on the primary side is higher than or equal to the pressure on the secondary side in the functional component 50.

The material forming each part of the valve structure 10 is not particularly limited. As a preferred example, the valve body 52 can be made of fluororesin such as polytetrafluoroethylene (PTFE), and the valve seat 53 can be made of fluororubber such as vinylidene fluoride (FKM). Further, the spring 51 can be made of metal such as stainless steel, and the attachment portion 31, the second body 40 and the connection portion 32 can be made of metal such as aluminum alloy, stainless steel, steel plate or titanium. In addition, the valve body 52 can be made of metal such as stainless steel, or fluororubber such as FKM. When the valve body 52 is made of fluorine rubber such as FKM, it is preferable that the valve seat 53 is made of fluorine resin such as PTFE.

The heat-sealing film 60 shown in Fig. 16 or the like is configured to be bonded to both the valve structure 10 and the packaging materials 111 and 112X of the case 110Y by heat sealing. While the functional component 50 is housed in the housing space S2 (see Fig. 22), the heat-sealing film 60 is sealed to the attachment portion 31 of the first body 30 before the first body 30 and the second body 40 are combined. The heat-sealing film 60 is sealed to the attachment portion 31 so as to cover a large part of the surface of attachment portion 31. As the heat-sealing film 60, various known adhesive films can be employed. The heat-sealing film 60 may be, for example, a single layer film of maleic anhydride-modified polypropylene (PPa), or a multilayer laminated film of PPa, polyethylene naphthalate (PEN) and PPa A multilayer laminated film of PPa, polypropylene (PP) and PPa may be applied. In addition, in place of the PPa resin, a metal-bondable resin such as an ionomer resin, modified polyethylene or EVA is also applicable. In Embodiment 3, a laminated film including a core material and having a three-layer structure of PPa/polyester fiber/PPa is employed as the heat-sealing film 60. As the core material, various known materials can be employed in addition to the polyester fiber. For example, the core material may be a polyester film such as a PEN film, a polyethylene terephthalate film or a polybutylene terephthalate film, polyamide fiber, or carbon fiber.

In particular, from the viewpoint of electrolytic solution resistance, it is preferable to coat the surface of the attachment portion 31 with a corrosion inhibitor to form a corrosion prevention film layer. This is particularly useful for the attachment portion 31 made of metal such as aluminum, but may also be useful for the attachment portion 31 made of another material. The coating can be performed by immersing the attachment portion 31 in a liquid of a corrosion inhibitor, and then performing baking treatment. This enables a corrosion prevention film layer to be formed on the outer surface of the attachment portion 31 and the inner surface facing the first ventilation passage LX, so that it is possible to prevent corrosion of the outer surface by gas generated from the power storage device element 120X and corrosion of the inner surface by gas passing through the first ventilation passage LX. In particular, from the viewpoint of electrolytic solution resistance, the surfaces of not only the attachment portion 31 but also the connection portion 32, the second body 40 and the functional component 50 may be coated in the same manner to form a corrosion prevention film layer. When the surfaces of the connection portion 32, the second body 40 and the functional component 50 are coated with a corrosion inhibitor, it is particularly preferable to form a corrosion prevention film layer in a predetermined region including the male screw 32X of the connection portion 32, the female screw 40A of the second body 40, the valve body 52, and a portion where the second body 40 and the valve seat 53 are in contact with each other. However, from the viewpoint of suppressing deterioration of bonding performance between the attachment portion 31 and the packaging materials 111 and 112X by the electrolytic solution, it is useful to apply the coating particularly to the attachment portion 31. The material of the corrosion inhibitor is not particularly limited, and is preferably one having acid resistance, and the corrosion prevention film layer can be formed by a chromic acid chromate treatment, a phosphoric acid chromate treatment or the like.

### <3-4. Method for manufacturing valve structure>

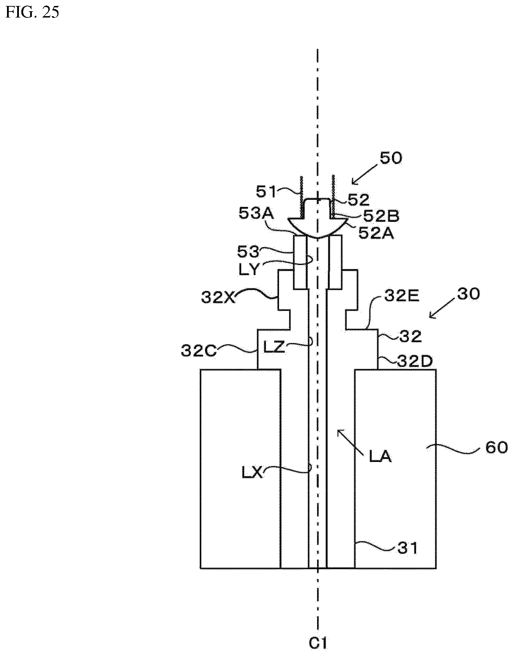

A method of manufacturing the valve structure 10 will be described with reference to Figs. 24 and 25. The method for manufacturing the valve structure 10 includes a surface treatment step, a film sealing step, and a combining step.

In the surface treatment step, surface treatment is performed in which at least one of the first body 30, the second body 40 and the functional component 50 is coated with a corrosion inhibitor to form a corrosion prevention film layer. In Embodiment 3, surface treatment is performed on the first body 30, the second body 40, the valve body 52 and the valve seat 53. Thus, corrosion of the first body 30, the second body 40 and the functional component 50 by an electrolytic solution is suppressed. In addition, adhesion strength between the first body 30 and the heat-sealing film 60 is increased.

In the surface treatment step, it is preferable to perform surface treatment on at least the attachment portion 31 of the first body 30, to which the heat-sealing film 60 is sealed. In the surface treatment step, it is preferable that surface treatment is performed on at least a portion of the first body 30 and the second body 40, to which an adhesive for joining the first body 30 and the second body 40 to each other is applied. The portion to which the adhesive for joining the first body 30 and the second body 40 to each other is applied is, for example, the male screw 32X, the female screw 40A, the end surface 32E and the end surface 41. In the surface treatment step, it is preferable that surface treatment is performed on at least a portion of the first body 30, to which an adhesive for joining the valve seat 53 and the first body 30 to each other is applied. In Embodiment 3, for example, the first body 30, the second body 40, the valve body 52 and the valve seat 53 are immersed in a liquid of a corrosion inhibitor to form a corrosion prevention film layer on the entire surface of each of the first body 30, the second body 40, the valve body 52 and the valve seat 53. The surface of each of the first body 30, the second body 40, the valve body 52 and the valve seat 53 includes an inner surface and an outer surface.

A film sealing step shown in Fig. 24 is carried out after the surface treatment step. In the film sealing step, the heat-sealing film 60 is sealed to the attachment portion 31 of the first body 30 in which the functional component 50 is not housed. Specifically, the heat-sealing film is aligned with the attachment portion 31 of the first body 30, and the attachment portion 31 and the heat-sealing film 60 are sandwiched between seal bars to seal the heat-sealing film 60 to the attachment portion 31. As heat sealing conditions for sealing the heat-sealing film 60 to the attachment portion 31, for example, the temperature is 200°C and the time is 2 minutes. The heat-sealing film 60 may be heat-sealed after the first body 30 is heated, for example, at 200°C for 2 minutes. The heat-sealing film 60 may be sealed to the attachment portion 31 of the first body 30 by heating the first body 30 and the heat-sealing film 60 simultaneously, for example, at 200°C for 2 minutes. The adhesive strength between the heat-sealing film 60 and the case 110Y and valve structure 10 when the valve structure 10 is attached to the case 110Y is a strength at which bonding between the heat-sealing film 60 and the case 110Y and valve structure 10 is not loosened even if the pressure of the internal space S1 of the housing 110X reaches a pressure at which the functional component 50 is opened.

In a combining step, the second body 40 is combined with the first body 30 while the functional component 50 is housed in the housing space S2 (see Fig. 22). As shown in Fig. 25, in the housing step, first, the valve seat 53 is joined to the connection portion 32 of the first body 30 with an adhesive. Next, the contact portion 52A of the valve body 52 is placed on the valve seat 53, and the spring 51 is inserted into the shaft portion 52B of the valve body 52 placed on the valve seat 53. Next, the adhesive is applied to at least one of the male screw 32X, the female screw 40A (see Fig. 22), the end surface 32E and the end surface 41 (see Fig. 7). The second body 40 and the first body 30 are coupled to each other by combining the second body 40 with the first body 30 such that the male screw 32X and the female screw 40A (see Fig. 7) are engaged with each other. As a result, the functional component 50 is housed in the housing space S2 defined by the first body 30 and the second body 40 coupled to each other.

In the above method for manufacturing the valve structure 10, the film sealing step is carried out before the combining step. At the time when the film sealing step is carried out, the functional component 50 is not housed in the housing space S2, and therefore, the functional component 50 is not affected by heat in sealing of the heat-sealing film 60 to the first body 30. For this reason, the functional component 50 is unlikely to be damaged.

### <3-5. Method for attaching valve structure>

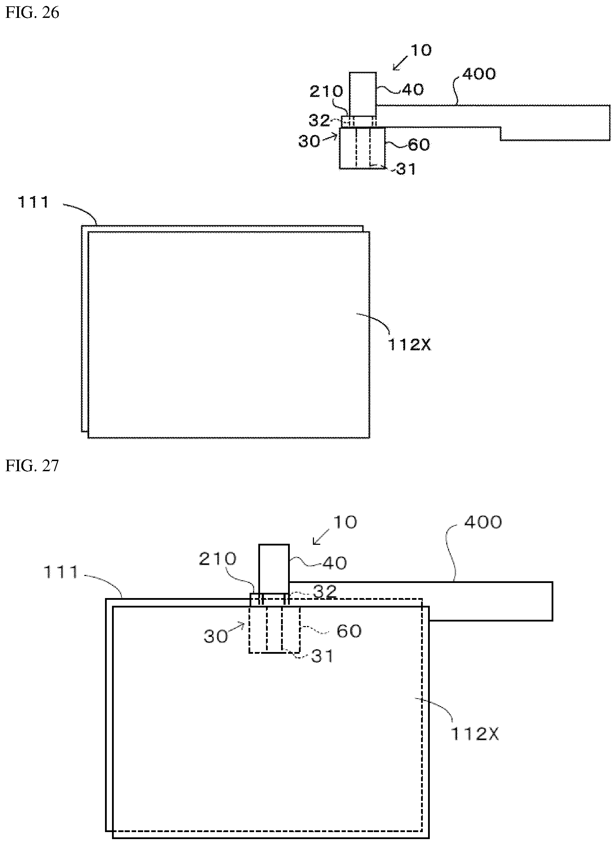

A method of attaching the valve structure 10 to the case 110Y will be described with reference to Figs. 26 to 28. First, using a fixing device (not shown), the packaging materials 111 and 112X are fixed while facing each other. As shown in Fig. 26, the valve structure 10 is held by a holding device 210 of a tool 400. Here, the valve structure 10 is held such that the holding device 210 comes into surface contact with the first plane 32A and the second plane 32B of the connection portion 32 to solidly sandwich the connection portion 32 by the holding device 210. In Figs. 26 to 28, molded parts 111B and 112B of the packaging materials 111 and 112X are not particularly shown because attachment of the valve structure 10 is mainly illustrated, but the molded parts 111B and 112B are appropriately formed before, during or after attachment of the valve structure 10.

As shown in Fig. 27, the tool 400 is driven to move the valve structure 10 held by the holding device 210, so that the attachment portion 31 to which the heat-sealing film 60 is sealed enters a gap between the packaging materials 111 and 112X facing each other. Here, the valve structure 10 is moved so that the connection portion 32 does not enter the gap. Therefore, the attachment portion 31 is sandwiched between the outer peripheral portions of the packaging materials 111 and 112X. Here, the valve structure 10 is moved such that a portion as the peripheral edge seal portion 150 in the packaging materials 111 and 112X is parallel to the first plane 32A and the second plane 32B of the connection portion 32.

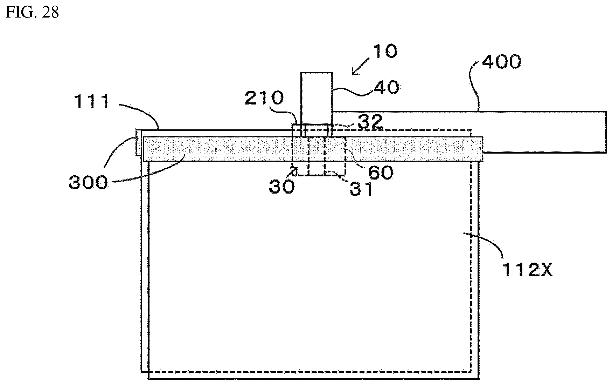

As shown in Fig. 28, a pair of heated seal bars 300 sandwich the outer peripheral portions of the packaging materials 111 and 112X from the outside. As a result, the outer peripheral portions of the packaging materials 111 and 112X are sealed by receiving heat from the seal bars 300, so that the peripheral edge seal portion 150 is formed. As heat sealing conditions for forming the peripheral edge seal portion 150, for example, the temperature is 200°C and the time is 6 seconds. Thus, the valve structure 10 is fixed to the peripheral edge seal portion 150 such that only the attachment portion 31 of the valve structure 10 is sandwiched between the packaging materials 111 and 112X with the heat-sealing film 60 interposed between the attachment portion and the packaging materials. Here, the first wing-shaped portion 31A and the second wing-shaped portion 31B in the attachment portion 31 are fixed while a line connecting sharp end parts of the respective wing-shaped portions is not inclined with respect to a direction (horizontal direction) in which the peripheral edge seal portion 150 extends. Thereafter, a pair of seal bars 300 returns to a predetermined position, and the holding device 210 releases the valve structure 10, and returns to a predetermined position.

In the above step, the holding device 210 can firmly hold the valve structure 10 by a pair of parallel first and second planes 32A and 32B. Thus, the valve structure 10 can be accurately conveyed to a desired location with respect to the packaging materials 111 and 112X. During heat sealing processing, the valve structure 10 can be firmly fixed at a desired location to the packaging materials 111 and 112X. That is, the valve structure 10 can be accurately aligned with respect to the case 110Y. The alignment mentioned here includes adjustment of the phase of the valve structure 10 around the central axis C1. That is, it is possible to accurately adjust the angle of the attachment portion 31 with respect to the peripheral edge seal portion 150 of the case 110Y around the central axis C1. The above configuration enables the valve structure 10 to be easily attached to the case 110Y.

### <3-6. Test>

The inventor of the present application manufactured valve structures of an example and a comparative example, and conducted a test of measuring a pressure at which a functional component is opened. In the following description, among the elements forming the valve structures of the example and the comparative example, elements that are identical to those in Embodiment 3 are given the same symbols as in Embodiment 3.

The valve structure 10 of the example was manufactured by the manufacturing method of the embodiment 3, that is, a manufacturing method in which a film sealing step is carried out before a combining step. On the other hand, the valve structure 10 of the comparative example was manufactured a manufacturing method in which a film sealing step is carried out after a combining step. In other words, in the valve structure 10 of the comparative example, the heat-sealing film 60 was sealed to the first body 30 with the functional component 50 housed in the housing space S2. As heat sealing conditions for sealing the heat-sealing film 60 to the first body 30 in the example and the comparative example, the temperature is 200°C and the time is 2 minutes. In the example and the comparative example, the set value of a pressure at which the functional component 50 is opened is 0.1 MPa.

In this test, the valve opening pressures in the valve structure 10 of each of the example and the comparative example was measured. In the valve structure 10 of the example, the functional component 50 was opened at 0.1 MPa. In the valve structure of the comparative example, the functional component 50 was opened at 0.14 MPa. In the valve structure 10 of the comparative example, the functional component 50 was opened only when the pressure became 40% above the set pressure. From the above results, it was confirmed that in the valve structure 10 of the example, the functional component 50 was substantially free from damage because the functional component 50 was not affected by heat in sealing of the heat-sealing film 60 to the first body 30 as a result of carrying out the film sealing step before the combining step.

### <3-7. Modifications of Embodiment 3>

Embodiment 3 is an example of possible forms of a method for manufacturing a valve structure for a power storage device and a valve structure for a power storage device according to the present disclosure, and is not intended to limit the forms thereof. The method for manufacturing a valve structure for a power storage device and a valve structure for a power storage device according to the present disclosure may have a form different from that exemplified in Embodiment 3. An example thereof is a form in which a part of the configuration of Embodiment 3 is replaced, changed or omitted, or a form in which a new configuration is added to the Embodiment 3. Some examples of modifications of Embodiment 3 will be described below.

### <3-7-1>

The method for manufacturing the valve structure 10 is not limited to that shown in Embodiment 3, and can be arbitrarily changed. For example, in the method for manufacturing the valve structure 10, the surface treatment step can be omitted.

### <3-7-2>

The configuration of the valve structure 10 is not limited to that shown in Embodiment 3, and can be arbitrarily changed. In Embodiment 3, the attachment portion 31 and the connection portion 32 are integrally formed, but the attachment portion 31 and the connection portion 32 may be separately formed.

### <3-7-3>

The configuration of the functional component 50 is not limited to that shown in Embodiment 3, and can be arbitrarily changed. For example, the functional component 50 can form, instead of a valve of ball spring type as described above, a check valve of different type, such as poppet type, duckbill type, umbrella type or diaphragm type, which is capable of performing degassing repeatedly. In addition, the functional component 50 may form, instead of a check valve capable of performing degassing repeatedly as described above, a breaking valve capable of performing degassing only once, that is, a breaking valve configured to tear if the internal pressure of the case 110Y is caused to increase by gas generated in the case 110Y.

### <3-7-4>

The case 110Y is formed by heat-sealing the packaging material 111 and the packaging material 112X, but the case 110Y may be formed by folding one packaging material in the case 110Y and heat-sealing the peripheral portion.

### DESCRIPTION OF REFERENCE SIGNS

### <Embodiments 1 and 2>

100, 100A: Valve structure
110, 110A: Valve structure main body
112, 112XA: Bonding portion
113: Circular portion
114, 115: Wing-shaped extension end part
120, 120A: Heat-sealable film
130: Primary seal portion
132: Secondary seal portion
200: Housing
310: Valve function portion
320: Seal attachment portion
A1: Ventilation passage
H1: Vent hole
O1: Exhaust port
<Embodiments 3>
10: Valve structure
30: First body
40: Second body
50: Functional component
53: Valve seat
100: Power storage device
100A: Case
120: Power storage device element

## Claims

1. A heat-sealable film for bonding a housing and a valve device to each other,
the heat-sealable film comprising a heat-resistant resin layer having a melting peak temperature in a range of 150°C or higher and 350°C or lower, and
the heat-sealable film having a heat shrinkage ratio of 7.0% or less in each of MD and TD when heated in an environment at 200°C for 10 minutes.

2. The heat-sealable film according to claim 1, wherein the heat-resistant resin layer includes a nonwoven fabric.

3. The heat-sealable film according to claim 1 or 2, further comprising a thermoplastic resin layer having a melting peak temperature of 120°C or higher and 160°C or lower.

4. The heat-sealable film according to claim 3, wherein the thermoplastic resin layer contains an acid-modified polyolefin.

5. The heat-sealable film according to claim 4, wherein the acid-modified polyolefin contains at least one of acid-modified homopolypropylene and acid-modified block polypropylene.

6. The heat-sealable film according to any one of claims 1 to 5, wherein at least a part of a surface of the valve device is treated with a treatment liquid containing an acrylic resin, chromium nitrate and phosphoric acid.

7. A valve device with a heat-sealable film, wherein the heat-sealable film according to any one of claims 1 to 6 is heat-sealed to an outer periphery of the valve device.

8. The valve device with a heat-sealable film according to claim 7, wherein the outer periphery of the valve device is made of metal.

9. A power storage device comprising:
a power storage device element;
a housing for housing the power storage device element; and
a valve device attached to the housing,
wherein the heat-sealable film according to any one of claims 1 to 6 is heat-sealed between the housing and the valve device.

10. A method for manufacturing a valve structure for a power storage device, which is attached to a case in which a power storage device element is housed, the valve structure including:
a functional component which is opened so that gas generated in the case passes from an inner side to an outer side of the case if an internal pressure of the case is caused to increase by the gas;
a first body; and
a second body which defines a housing space for housing the functional component together with the first body, and is combined with the first body so as to close the housing space with the functional component housed in the housing space,
the method comprising:
a film sealing step of sealing a heat-sealing film to the first body in which the functional component is not housed, the heat-sealing film being interposed between the case and the first body for sealing the case and the first body; and
an combining step of combining the second body with the first body while housing the functional component in the housing space, the combining step being carried out after the film sealing step.

11. The method for manufacturing a valve structure for a power storage device according to claim 10, further comprising a surface treatment step of performing surface treatment on at least one of the functional component, the first body, and the second body, the surface treatment step being carried out before the film sealing step.

12. The method for manufacturing a valve structure for a power storage device according to claim 11, wherein in the surface treatment step, the surface treatment is performed on at least a portion of the first body to which the heat-sealing film is sealed.

13. The method for manufacturing a valve structure for a power storage device according to claim 11 or 12, wherein
the first body and the second body are joined to each other with an adhesive in the combining step, and
the surface treatment is performed on at least a portion of the first body to which the adhesive for joining the first body and the second body to each other is applied in the surface treatment step.

14. The method for manufacturing a valve structure for a power storage device according to any one of claims 11 to 13, wherein
the functional component includes a valve seat,
the valve seat and the first body are joined to each other with an adhesive in the combining step, and
the surface treatment is performed on at least a portion of the first body to which the adhesive for joining the valve seat and the first body to each other is applied in the surface treatment step.

15. A valve structure for a power storage device which is manufactured by the method for manufacturing a valve structure for a power storage device according to any one of claims 10 to 14.

16. A power storage device comprising the valve structure for a power storage device according to claim 15.
